# EUROPEAN PATENT APPLICATION

(11) **EP 4 169 630 A1**
(43) Date of publication of application: **26.04.2023**
(21) Application number: 20944200.3
(22) Date of filing: 06.10.2020
(51) Int. Cl.: B09B 3/00, C08J 11/12, B29B 17/02, B01J 21/06

(54) **METHOD AND DEVICE FOR PROCESSING OBJECT**

(30) Priority: 10.07.2020 JP 2020118884
(71) Applicant: Rapas Co., Ltd., Kusatsu-shi, Shiga 525-0050 (JP); Rapas International Limited, Kowloon, Hong Kong 999077 (HK)
(72) Inventor: KITAMURA Keiko, Kusatsu-shi, Shiga 525-0050 (JP); KASHIMOTO Itsushi, Kusatsu-shi, Shiga 525-0050 (JP); NISHIMURA Masahiro, Kusatsu-shi, Shiga 525-0050 (JP)
(74) Representative: Hertin und Partner Rechts- und Patentanwälte PartG mbB
(86) International application number: PCT/JP2020/037891
(87) International publication number: WO 2022/009441

(57) **Abstract**

Provided is a processing method for an object, including the steps of: arranging an object in a first portion that is a portion having a space and configured to process the object; and decomposing an organic substance in the object by covering the object with catalysts formed of granules made of a metal oxide containing titanium and bringing the catalysts into contact with the organic substance, and simultaneously maintaining the catalysts in the first portion at a temperature of 480°C or more and 550°C or less. The step of decomposing the organic substance in the object includes causing gas containing oxygen to flow into the first portion so that a decomposition reaction of the organic substance occurs, and the catalysts are slightly moved in at least a part of a surface of the object.

## Description

### Technical Field

The present invention relates to a processing method and a processing apparatus for an object.

The present application claims priority from Japanese Patent Application No. 2020-118884, filed on July 10, 2020, the contents of which are incorporated herein by reference in their entirety.

### Background Art

As a processing method for decomposing only an organic substance contained in an object, a method using catalysts made of titanium oxide (titanium dioxide) has been known. More specifically, there has been proposed a method involving bringing catalysts made of titanium oxide into contact with a waste plastic piece, heating the catalysts, and stirring all the catalysts in a reaction container with a stirring blade (see Patent Literatures 1 and 2). Further, there has been proposed a method using granules of titanium oxide as catalysts (see Patent Literatures 3 and 4). In addition, there has been proposed a processing apparatus including a circulation tank having a rotary wheel, which circulates an object and catalysts, mounted thereon and a mixing tank that recovers the catalysts after the circulation (see Patent Literature 5).

### Citation List

### Patent Literature

[PTL 1] JP 2002-363337 A
[PTL 2] JP 2004-182837 A
[PTL 3] WO 2010/021122 A1
[PTL 4] WO 2013/089222 A1
[PTL 5] WO 2009/051253 A1

### Summary of Invention

### Technical Problem

In the above-mentioned processing method for an object, when all the catalysts in the reaction container are stirred with the stirring blade, the catalysts may be worn due to rubbing between the catalysts and between the waste plastic piece and the catalysts. In such case, it may be difficult to use the catalysts for a long period of time.

In view of the foregoing, an object of the present invention is to provide a processing method and a processing apparatus for an object which are capable of processing an object for a long period of time.

### Solution to Problem

A processing method for an object of the present application is a processing method for an object containing an organic substance. The processing method for an object of the present application includes the steps of: arranging the object in a first portion that is a portion having a space and configured to process the object; and decomposing an organic substance in the object by covering the object with catalysts formed of granules made of a metal oxide containing titanium and bringing the catalysts into contact with the organic substance, and simultaneously maintaining the catalysts in the first portion at a temperature of 480°C or more and 550°C or less. The step of decomposing the organic substance in the object includes causing gas containing oxygen to flow into the first portion so that a decomposition reaction of the organic substance occurs, and the catalysts are slightly moved in at least a part of a surface of the object.

In the processing method for an object of the present application, the catalysts formed of granules made of a metal oxide containing titanium are used. Here, the metal oxide is a general term for oxides containing one or more kinds of metal elements. When the gas containing oxygen is caused to flow into a reactor, and the catalysts are maintained at a predetermined temperature, oxidative decomposition of the organic substance that is brought into contact with the catalysts occurs. In the above-mentioned processing method for an object, the gas containing oxygen is caused to flow into the first portion so that the decomposition reaction of the organic substance occurs, and the catalysts are slightly moved in at least a part of the surface of the object. When the organic substance in the object is decomposed, the volume of the object is reduced. Due to the gas caused to flow into the first portion, the catalysts are slightly displaced on the surface of the object to come into contact with different regions of the object. Such movement of the catalysts continuously occurs, and the catalysts are slightly moved in at least a part of the surface of the object. In this manner, the decomposition of the organic substance in the object is accelerated. According to the above-mentioned processing method for an object, it is not required to stir the object and the catalysts when decomposing the organic substance in the object. Thus, the wear of the catalysts can be reduced, and the organic substance in the object can be easily decomposed. As described above, according to the processing method for an object of the present application, the object can be processed for a long period of time. Further, the object can be easily processed.

In the above-mentioned processing method for an object, in the step of decomposing the organic substance in the object, the step of stirring the catalysts for all the catalysts in the first portion is not performed. As the step of stirring the catalysts for all the catalysts in the first portion, there is given, for example, a case of performing mechanical stirring using a stirring blade that stirs all the catalysts in a first recess, a rotary wheel that circulates the catalysts in the first recess and stirs all the catalysts, or the like. When the stirring of the object and the catalysts is performed in such step of stirring the catalysts, the object and the catalysts are agitated, and the organic substance in the object may be exposed to the surface. In such case, undecomposed gas (for example, methane gas, carbon monoxide gas, and the like) formed without the organic substance being completely decomposed may be generated. When such step of stirring the catalysts is not performed, the exposure of the organic substance in the object to the surface is suppressed, and hence the above-mentioned generation of the undecomposed gas of the organic substance can be reduced. Further, the rubbing between the catalysts and between the object and the catalysts can be reduced. In addition, when the mechanical stirring is not performed, the generation of a load that presses the catalysts can be suppressed. Accordingly, the wear of the catalysts can be reduced. In addition, in an object having such size and shape that make it difficult to stir the object and the catalysts, the object can be processed as it is without being finely crushed. Further, also in an object that is difficult to crush and an object that cannot be crushed, the object can be processed as it is. The object can be processed as it is without being finely crushed, and hence the object can be easily processed. The step of decomposing the organic substance in the object may be performed without stirring the object and the catalysts.

In the processing method for an object, the step of decomposing the organic substance in the object may further include the step of moving the object (changing a spatial position of the object) while maintaining a state in which the object is covered with the catalysts. More specifically, the step of arranging the object may include arranging the object accommodated in a container having a mesh-like shape that enables the catalysts to pass therethrough in the first portion. The step of moving the object in the first portion includes moving the container under a state in which the object is accommodated in the container. With this configuration, the catalysts can be easily brought into contact with the surface of the object. As a result, the organic substance in the object can be more efficiently decomposed.

In the above-mentioned processing method for an object, a flow velocity of the gas containing oxygen when the gas containing oxygen is caused to flow into the reactor may be 0.5 m/min or more and 200 m/min or less. When the flow velocity of the gas is less than 0.5 m/min, the catalysts do not sufficiently flow on the surface of the object, and, in some cases, the organic substance in the object cannot be sufficiently decomposed. When the flow velocity of the gas is more than 200 m/min, the catalysts easily flow, and it may be difficult to reduce the wear of the catalysts. Accordingly, it is preferred that the flow velocity of the gas be 0.5 m/min or more and 200 m/min or less.

The step of decomposing the organic substance in the object may include burying the object by 50 mm or more from a surface of a plurality of catalysts accommodated in the space of the reactor. With this configuration, when the organic substance in the object is decomposed, the generation of undecomposed gas formed without the organic substance being decomposed can be suppressed.

In the above-mentioned processing method for an object, the gas containing oxygen may be air. Air is suitable as gas to be used in the processing method for an object.

In the above-mentioned processing method for an object, the granules may each have a particle diameter of 0.2 mm or more and less than 2 mm. Further, an angle at which the granules start sliding may be 0.5 degree or more and 15 degrees or less, and an angle at which all the granules finish sliding may be 2 degrees or more and 30 degrees or less. The shape of each of the above-mentioned granules is a substantially spherical shape. Through use of the catalysts each having such particle diameter and formed of substantially spherical granules, it becomes easy to slightly move the catalysts on the surface of the object. Accordingly, the catalysts formed of the above-mentioned granules are suitable as catalysts to be used in the processing method for an object.

In the above-mentioned processing method for an object, the object may be a waste substrate. Depending on the size of the waste substrate, it may be difficult to stir the waste substrate and the catalysts. According to the processing method for an object of the present application, it is not required to finely crush the waste substrate, and the waste substrate can be processed as it is. In addition to the waste substrate, the object may be waste plastic, medical waste, infectious medical waste, or the like. According to the above-mentioned processing method for an object, it is not required to crush the object, and hence contamination and infection can be suppressed.

In the above-mentioned processing method for an object, the waste substrate may have an area of 4 cm² or more in plan view from a thickness direction. The area of the waste substrate in plan view from the thickness direction is preferably 100 cm² or more, more preferably 600 cm² or more. Through use of the waste substrate having the above-mentioned area, the object can be efficiently processed. The waste substrate is, for example, an electronic circuit board. The electronic circuit board includes a printed board and electronic components mounted on the printed board. When the electronic circuit board is processed to decompose a resin in the printed board by the above-mentioned processing method for an object, it becomes easy to recover a processed material containing a metal included in the printed board and the electronic components. The processed material maintaining a state of a plate shape and the electronic components may also be recovered by decomposing the resin in the printed board to some degree.

A processing apparatus of the present application is a processing apparatus for decomposing an organic substance in an object. The processing apparatus includes: a first portion that is a portion having a first recess and configured to process the object; catalysts formed of granules made of a metal oxide containing titanium, which are maintained in a state of being accommodated in the first recess; a supply unit connected to the first portion and configured to supply gas containing oxygen into the first recess; a heating unit configured to heat at least any one of the catalysts or the gas; a container configured to accommodate the object and having a shape that enables the catalysts to pass therethrough; and a support unit configured to support the container. The container is enabled to be displaced along a vertical direction so as to selectively take a state in which at least a part of the container is in contact with the catalysts in the first recess and a state in which the container is prevented from being in contact with the catalysts. The processing apparatus is prevented from including a stirring unit configured to stir the catalysts for all the catalysts accommodated in the first recess.

In a processing apparatus disclosed in the above-mentioned Patent Literature 1, an object and catalysts are stirred when the object and the catalysts are circulated in a circulation tank by a rotary wheel. Thus, the catalysts, and the object and the catalysts are brought into contact with each other to cause the wear of the catalysts. In addition, in the above-mentioned Patent literature 1, it is stated that, through use of catalysts circulating in the circulation tank, plastic and an organic substance in an object accommodated in a basket can be decomposed in a mixing tank. However, when the basket is taken out from the mixing tank, the catalysts may leak from the mixing tank to make it difficult to process the object.

The processing apparatus of the present application includes the first portion, the catalysts, the supply unit, the heating unit, and the container. The above-mentioned catalysts are formed of granules made of a metal oxide containing titanium. Here, the metal oxide is a general term for oxides containing one or more kinds of metal elements. First, the container is displaced along a vertical direction so that the object accommodated in the container is covered with the catalysts. In this case, at least a part of the container is brought into a state of being in contact with the catalysts. Then, the gas containing oxygen is supplied into the first recess, and the catalysts are heated. As a result, the organic substance in the object can be decomposed. After the object is processed, the container is displaced along the vertical direction, and the container is taken out from the catalysts. In this case, the container is brought into a state of not being in contact with the catalysts. When the container is displaced in the vertical direction, the catalysts fall into the first recess, and hence the leakage of the catalysts from the first recess can be reduced. The catalysts are maintained in a state of being accommodated in the first recess, and hence it becomes easy to repeatedly process the object in the first portion.

The processing apparatus of the present application does not include the stirring unit that stirs the catalysts for all the catalysts accommodated in the first recess when the organic substance in the object is decomposed. As the stirring unit, there are given, for example, a stirring blade that stirs all the catalysts accommodated in the first recess, a rotary wheel that circulates the catalysts accommodated in the first recess and stirs all the catalysts, and the like. When the stirring unit is not provided, the rubbing between the catalysts and between the object and the catalysts can be reduced. In addition, when the mechanical stirring is not performed, the generation of a load that presses the catalysts can be suppressed. Accordingly, the wear of the catalysts can be reduced. As described above, according to the processing apparatus of the present application, the object can be processed for a long period of time. Further, it is easy to repeatedly process the object.

When the processing apparatus of the present application does not include the above-mentioned stirring unit, in an object having such size and shape that make it difficult to stir the object and the catalysts, the object can be processed as it is without being finely crushed. Further, also in an object that is difficult to crush and an object that cannot be crushed, the object can be processed as it is. The object can be processed as it is without being finely crushed, and hence the object can be easily processed.

In the above-mentioned processing apparatus, when at least a part of the container is in contact with the catalysts, the container may be movable (spatial position of the container may be changed). When the container is movable while at least a part of the container is in contact with the catalysts, the catalysts are easily brought into contact with the surface of the object, and the organic substance in the object can be more efficiently decomposed.

In the above-mentioned processing apparatus, the support unit may include: a rail including an inclined portion inclined with respect to the vertical direction; and a first component which is mounted on the container and which is travelable on the rail. Through adoption of such configuration, the container can be displaced along the rail, and it becomes easy to continuously process the object. Further, when the rail includes the inclined portion, it becomes easy to displace the container along the vertical direction.

The above-mentioned processing apparatus may further include a brim portion which is mounted on the container and which protrudes to any one of sides in a traveling direction of the rail. Through adoption of such configuration, it becomes easy to cause the brim portion to sink into the catalysts while displacing the container along the rail. Accordingly, it becomes easy to cause at least a partial region of the container to sink so as to be covered with the catalysts.

In the above-mentioned processing apparatus, the support unit may include a second component which is mounted on the container and which is enabled to be displaced along the vertical direction. Through adoption of such configuration, it becomes easy to displace the container along the vertical direction.

In the above-mentioned processing apparatus, the container includes a bottom wall portion and a peripheral wall portion extending along the vertical direction from an outer edge of the bottom wall portion, and the processing apparatus may include a container having a mesh-like shape that enables the catalysts to pass therethrough and a blade portion which protrudes to a side of the bottom wall portion opposite to the peripheral wall portion and which is turnable along an imaginary plane perpendicular to the vertical direction. When the blade portion is turned while the container is displaced along the vertical direction, it becomes easy to cause at least a partial region of the container to sink so as to be covered with the catalysts while avoiding the catalysts.

In the above-mentioned processing apparatus, the gas containing oxygen may be air. Air is suitable as gas to be used in the processing apparatus.

### Advantageous Effects of Invention

According to the above-mentioned processing method and the processing apparatus for an object, the object can be processed for a long period of time.

### Brief Description of Drawings

FIG. 1 is a schematic sectional view for illustrating a structure of a processing apparatus in a first embodiment.
FIG. 2 is a flowchart for illustrating an example of a processing method for an object.
FIG. 3 is a schematic sectional view for illustrating a wear ratio measuring device.
FIG. 4 is a schematic sectional view for illustrating a structure of a processing apparatus in a second embodiment.
FIG. 5 is a schematic sectional view for illustrating the structure of the processing apparatus in the second embodiment.
FIG. 6 is a schematic perspective view for illustrating a container in a state of traveling on a rail.
FIG. 7 is a schematic side view for illustrating the container in the state of traveling on the rail.
FIG. 8 is a schematic sectional view for illustrating a modification example of the processing apparatus in the second embodiment.
FIG. 9 is a schematic sectional view for illustrating a structure of a processing apparatus in a third embodiment.
FIG. 10 is a schematic sectional view for illustrating the structure of the processing apparatus in the third embodiment.
FIG. 11 is a schematic sectional view for illustrating a structure of a processing apparatus in a fourth embodiment.
FIG. 12 is a schematic view for illustrating a state in which the container and waste substates are covered with catalysts.
FIG. 13 is a photograph for showing a state of an electronic circuit board before processing.
FIG. 14 is a photograph for showing a state of a decomposed product.

### Description of Embodiments

Next, a processing method and a processing apparatus for an object according to one embodiment of the present invention are described with reference to the drawings. In the following drawings, like or corresponding parts are denoted with like reference symbols, and description thereof is not repeated.

### (First Embodiment)

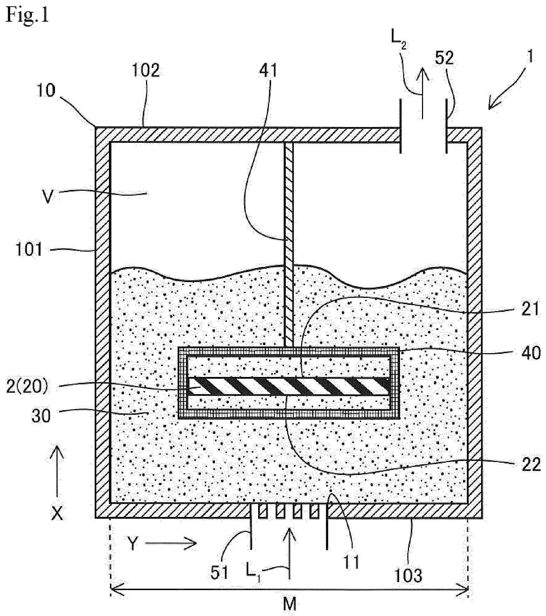

FIG. 1 is a schematic sectional view for illustrating a structure of a processing apparatus in a first embodiment. In FIG. 1, an X-axis direction is a direction along a center axis of a side wall portion in a reactor. A Y-axis direction is a radial direction of the side wall portion. Referring to FIG. 1, a processing apparatus 1 includes a reactor 10 serving as a first portion that is a portion for processing an object 2, catalysts 30, and a container 40. The processing apparatus 1 is an apparatus for decomposing an organic substance in the object 2 containing the organic substance.

The reactor 10 includes a side wall portion 101, an upper wall portion 102, and a lower wall portion 103. In this embodiment, the side wall portion 101 has a hollow cylindrical shape. The side wall portion 101 has an inner diameter M of, for example, about 150 mm. The side wall portion 101 has a length in the X-axis direction of, for example, about 135 mm. The upper wall portion 102 is arranged so as to cover one opening of the side wall portion 101. The lower wall portion 103 is arranged so as to cover another opening of the side wall portion 101. The reactor 10 has a space V surrounded by the side wall portion 101, the upper wall portion 102, and the lower wall portion 103. A supply port 11 is formed at the center of the lower wall portion 103. In this embodiment, the supply port 11 is formed of a plurality of through holes. In plan view from the X-axis direction, the outer shape of the supply port 11 has a circular shape. A pipe 51 is installed on the lower wall portion 103. The pipe 51 is arranged so that the space surrounded by the pipe 51 and the supply port 11 communicate to each other. The pipe 51 is a gas inflow path. Thus, gas flows into the space V of the reactor 10 from the pipe 51 in a direction of an arrow L₁. A pipe 52 is installed at the center of the upper wall portion 102. A part of the pipe 52 is arranged so as to be exposed to the inside of the space V. The pipe 52 is a gas discharge path. Accordingly, the gas is discharged from the space V of the reactor 10 to the pipe 52 in a direction of an arrow L₂. The gas flows along the X-axis direction.

A plurality of catalysts 30 are maintained in a state of being accommodated in the space V of the reactor 10. The catalysts 30 are arranged so as to be brought into contact with the lower wall portion 103. In this embodiment, the amount of the plurality of catalysts 30 accommodated in the space V is, for example, 1,000 g or more. The amount of the plurality of catalysts 30 accommodated in the space V is suitably set in accordance with the capacity of the reactor 10. The catalysts 30 are formed of granules made of a metal oxide containing titanium. In this embodiment, the catalysts 30 are formed of granules made of titanium oxide (titanium dioxide). In this embodiment, the granules each have a substantially spherical shape. The substantially spherical shape means that corners of the surface of the granule are rounded off and sphericity is high. In this embodiment, the granules each have a particle diameter of 0.2 mm or more and less than 2 mm. The above-mentioned particle diameter of each of the granules may be measured by, for example, a sieving method.

In this embodiment, the rolling inclination angle of the granules has the following numerical ranges. Specifically, the angle at which the granules start sliding is 0.5 degree or more and 15 degrees or less, and the angle at which all the granules finish sliding is 2 degrees or more and 30 degrees or less. The angle at which the granules start sliding is preferably 0.5 degree or more and 10 degrees or less, more preferably 0.5 degree or more and 8 degrees or less, still more preferably 0.5 degree or more and 5 degrees or less. The angle at which the granules finish sliding is preferably 2 degrees or more and 25 degrees or less, more preferably 2 degrees or more and 22 degrees or less, still more preferably 2 degrees or more and 18 degrees or less. When the granules have the above-mentioned ranges, the sphericity of the shape of each of the granules can be increased. The above-mentioned rolling inclination angle of the granules is measured, for example, under the following conditions. 20 g of the granules are arranged on a glass plate. After that, the glass plate is inclined from a horizontal state (0 degrees), and the angle at which the granules start sliding and the angle at which all the granules finish sliding are measured.

The container 40 has a rectangular parallelepiped shape having an internal space. The container 40 has a mesh-like shape that enables the above-mentioned catalysts to pass therethrough. The container 40 is made of a metal (iron) capable of maintaining the form thereof at a temperature of about 550°C. The container 40 includes a mesh-like tubular portion, a mesh-like upper cover arranged so as to cover one opening, and a mesh-like bottom cover arranged so as to cover another opening. The upper cover is mounted so as to be removable from the tubular portion. A connecting portion 31 is attached to the upper wall portion 102 so as to be displaced in the Y-axis direction. For example, a rail (not shown) is installed on the upper wall portion 102, and a drive unit (not shown) capable of traveling on the rail is mounted on one end portion of the connecting portion 31. The object 2 is arranged in the container 40 under a state in which the upper cover is removed, and then the upper cover is attached. Thus, the object 2 is accommodated in the container 40. Then, another end portion of the connecting portion 31 is connected to the upper cover of the container 40. The length of the tubular portion in the X-axis direction is, for example, about 30 mm. The upper cover and the lower cover each have an area of, for example, about 45 mm×55 mm. The mesh size of each of the tubular portion, the upper cover, and the lower cover is, for example, 1 mm or more. The mesh size of each of the tubular portion, the upper cover, and the lower cover is preferably 2 mm or more and 100 mm or less, more preferably 2 mm or more and 50 mm or less, still more preferably 2 mm or more and 30 mm or less, particularly preferably 2 mm or more and 6 mm or less. The above-mentioned mesh size is suitably determined based on the sizes of the object 2 and the catalysts 30.

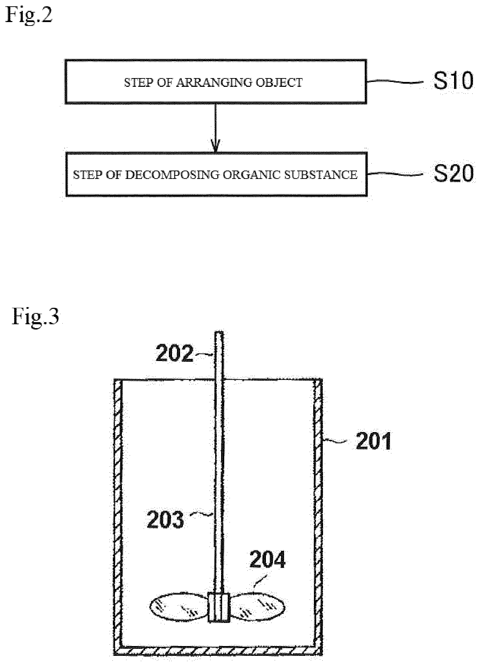

Next, the process of a processing method for the object 2 in this embodiment is described. FIG. 2 is a flowchart for illustrating an example of the processing method for the object 2 in this embodiment. Referring to FIG. 1 and FIG. 2, in the processing method for the object 2 in this embodiment, first, the step of arranging the object 2 is performed as a step (S10). More specifically, the object 2 is arranged in the reactor 10. In this embodiment, the object 2 is a waste substrate 20. The waste substrate 20 has one surface 21 and another surface 22. The waste substrate 20 has an area of, for example, 4 cm² or more in plan view from a thickness direction. In this embodiment, the waste substrate 20 is arranged in the reactor 10 in a state of being accommodated in the container 40. In this case, the container 40 is buried in the catalysts 30 so that the surfaces 21 and 22 of the waste substrate 20 are covered with the plurality of catalysts 30. Then, the waste substrate 20 is buried, for example, by 50 mm or more from the surface of the catalysts 30. In this embodiment, the waste substrate 20 is arranged so as to intersect (be orthogonal to) the X-axis direction. That is, the waste substrate 20 is arranged so that the surfaces 21 and 22 of the waste substrate 20 intersect (are orthogonal to) the direction (X-axis direction) in which the gas flows. In this manner, the object 2 is covered with the catalysts 30, and the catalysts 30 are brought into contact with the organic substance in the object 2. The waste substrate 20 is, for example, an electronic circuit board including a printed board and electronic components mounted on the printed board. The thickness direction of the electronic circuit board is the thickness direction of the printed board. In this embodiment, the surface 22 of the electronic circuit board on which the electronic components are mounted in a larger number is arranged so as to face the lower wall portion 103.

Next, the step of decomposing the organic substance is performed as a step (S20). More specifically, the waste substrate 20 is covered with the catalysts 30, and the catalysts 30 are brought into contact with the organic substance in the waste substrate 20. The gas containing oxygen is caused to flow into the reactor, and the catalysts 30 in the reactor 10 are maintained at a temperature of 480°C or more and 550°C or less. The catalysts 30 in the reactor 10 are maintained at a predetermined temperature by being heated from an outer wall side of the reactor 10 by a heating device or the like. More specifically, the fluctuation range of the temperature of the catalysts 30 with respect to the set temperature of the above-mentioned heating device is about plus or minus 30°C from the set temperature. Accordingly, the set temperature of the heating device is appropriately set so that the temperature of the catalysts 30 falls within the above-mentioned temperature range. In this embodiment, the catalysts 30 in the reactor 10 are heated to a predetermined temperature (for example, 480°C or more and 550°C or less) before the waste substrate 20 is arranged in the reactor 10.

In the step (S20), the gas is caused to flow into the reactor 10 so that the decomposition reaction of the organic substance in the waste substrate 20 occurs. In this case, the gas is caused to flow so as to spread throughout the inside of the reactor 10. The gas is gas containing oxygen. The gas containing oxygen is, for example, mixed gas containing oxygen. More specifically, the gas containing oxygen is air. Further, the gas is caused to flow into the reactor 10 so that the decomposition reaction of the organic substance in the waste substrate 20 occurs, and the catalysts 30 are slightly moved in at least a part of the surfaces 21 and 22 of the waste substrate 20. When the organic substance in the waste substrate 20 is decomposed, the volume of the waste substrate 20 is reduced. Owing to the gas caused to flow into the reactor 10, the catalysts 30 are slightly displaced on the surfaces 21 and 22 of the waste substrate 20 to come into contact with different regions of the waste substrate 20. Such movement of the catalysts 30 continuously occurs, and the catalysts 30 are slightly moved in at least a part of the surfaces 21 and 22 of the waste substrate 20. In this manner, the catalysts 30 are caused to slightly flow on the surfaces 21 and 22 of the waste substrate 20. The gas is caused to flow into the reactor 10 to such a degree that the catalysts 30 do not form a fluidized bed. In this embodiment, the flow velocity of the gas is 0.5 m/min or more and 200 m/min or less. The lower limit of the flow velocity of the gas is preferably 3 m/min, more preferably 4 m/min. The upper limit of the flow velocity of the gas is preferably 100 m/min, more preferably 50 m/min, still more preferably 20 m/min, particularly preferably 10 m/min. The above-mentioned flow velocity of the gas is calculated, for example, based on the inner diameter of the side wall portion 101 and the flow rate of the gas. In this embodiment, the lower limit of the flow rate (l/min) of the gas per unit mass (g) of the catalysts 30 is 4×10⁻³ l/min, preferably 0.01 l/min, more preferably 0.028 l/min. In this embodiment, the upper limit of the flow rate (l/min) of the gas per unit mass (g) of the catalysts 30 is 2 l/min, preferably 1 l/min, more preferably 0.1 l/min, still more preferably 0.085 l/min.

In this embodiment, in the step (S20), the step of stirring the catalysts 30 for all the catalysts 30 in the reactor 10 is not performed. In this embodiment, in the step (S20), the object 2 is moved while the state in which the waste substrate 20 is covered with the catalysts 30 is maintained. More specifically, the container 40 is moved while the waste substrate 20 is accommodated in the container 40. For example, the connecting portion 31 is displaced so as to reciprocate in the radial direction (Y-axis direction), to thereby displace the container 40 relative to the catalysts 30. As described above, the organic substance in the waste substrate 20 can be decomposed.

Here, in the processing method for the object 2 in this embodiment, the gas containing oxygen is caused to flow into the reactor 10, and the catalysts 30 are heated. Thus, the oxidative decomposition of the organic substance that is brought into contact with the catalysts 30 occurs. Further, the gas is caused to flow into the first portion so that the decomposition reaction of the organic substance occurs, and the catalysts 30 are slightly moved in at least a part of the surfaces 21 and 22 of the waste substrate 20. With this configuration, the decomposition of the organic substance in the waste substrate 20 is accelerated. According to the above-mentioned processing method for the object 2, it is not required to stir the waste substrate 20 and the catalysts 30 when decomposing the organic substance in the waste substrate 20. Thus, the wear of the catalysts 30 can be reduced, and the organic substance in the object 2 can be easily decomposed. As described above, according to the processing method for the object 2 in this embodiment, the waste substrate 20 can be processed for a long period of time, and the waste substrate 20 can be easily processed.

In the above-mentioned embodiment, in the step of decomposing the organic substance in the waste substrate 20, the step of stirring the catalysts 30 for all the catalysts 30 in the reactor 10 is not performed. When such step of stirring the catalysts 30 is not performed, the exposure of the organic substance in the waste substrate 20 to the surface is suppressed, and hence the generation of undecomposed gas of the organic substance in the waste substrate 20 can be reduced. Further, the rubbing between the catalysts 30 and between the waste substrate 20 and the catalysts 30 can be reduced. In addition, when the mechanical stirring is not performed, the generation of a load under which a stirring blade presses the catalysts 30 can be suppressed. Accordingly, the wear of the catalysts 30 can be reduced. In addition, in the waste substrate 20 having such size and shape that make it difficult to stir, the waste substrate 20 can be processed as it is without being finely crushed. The waste substrate 20 can be processed as it is without being finely crushed, and hence the waste substrate 20 can be easily processed.

In the above-mentioned embodiment, the waste substrate 20 is accommodated in the container 40. In the step of heating the catalysts 30, the container 40 is moved while the waste substrate 20 is accommodated in the container 40. With this configuration, the catalysts 30 can be easily brought into contact with the surfaces 21 and 22 of the waste substrate 20. In the above-mentioned embodiment, description has been given of the case in which the container 40 is displaced so as to reciprocate in the radial direction (Y-axis direction) of the side wall portion 101, but the present invention is not limited thereto. The container 40 may be displaced only in the direction of the arrow Y or the opposite direction with respect to the catalysts 30. In addition, the container 40 may be vibrated with respect to the catalysts 30. Further, the container 40 may be rotated about an axis. In such case, the container 40 is moved so that the catalysts 30 accommodated in the reactor 10 is not stirred. For example, the displacement speed, the rotation speed, and the magnitude of vibration of the container 40 are suitably set so that the catalysts 30 are not stirred. In the above-mentioned embodiment, description has been given of the case in which the container 40 accommodating the waste substrate 20 is displaced, but the present invention is not limited thereto. The waste substrate 20 may be displaced by holding the waste substrate 20 with a jig (for example, an arm) and displacing the jig. With this configuration, the organic substance in the waste substrate 20 can be efficiently decomposed. Similarly, the jig is displaced so that the catalysts 30 accommodated in the reactor 10 are not stirred. For example, the displacement speed of the jig is suitably set so that the catalysts 30 are not stirred. The step of displacing the waste substrate 20 may be performed simultaneously throughout the entirety of the step of decomposing the organic substance in the waste substrate 20, or may be performed in a part of the step of decomposing the organic substance in the waste substrate 20. The waste substrate 20 is not required to be moved with respect to the catalysts 30 throughout the entirety of the step of decomposing the organic substance in the waste substrate 20.

In the above-mentioned embodiment, description has been given of the case in which the waste substrate 20 is accommodated in the container 40, but the present invention is not limited thereto. The waste substrate 20 may be arranged so as to be brought into direct contact with the catalysts 30.

In the above-mentioned embodiment, the flow velocity of the gas when the gas containing oxygen is caused to flow into the reactor 10 is 0.5 m/min or more and 200 m/min or less. When the flow velocity of the gas is less than 0.5 m/min, in some cases, the catalysts 30 do not sufficiently flow on the surfaces 21 and 22 of the waste substrate 20, and the organic substance in the waste substrate 20 cannot be sufficiently decomposed. When the flow velocity of the gas is more than 200 m/min, the catalysts 30 easily flow, and it may become difficult to reduce the wear of the catalysts 30. Accordingly, it is preferred that the flow velocity of the gas be 0.5 m/min or more and 200 m/min or less.

In the above-mentioned embodiment, the waste substrate 20 has an area of 4 cm² or more in plan view from the thickness direction. The waste substrate 20 having a larger area can be processed by changing the capacity of the reactor 10. In such case, the area of the waste substrate 20 is, for example, 100 cm² or more, preferably 600 cm² or more. Although not particularly limited, the upper limit of the area of the waste substrate 20 is, for example, 1,000 cm². Through use of the waste substrate 20 having the above-mentioned area, the waste substrate 20 can be efficiently decomposed. In the above-mentioned embodiment, the waste substrate 20 is an electronic circuit board. In the above-mentioned processing method for the object 2, the electronic circuit board is processed to decompose a resin in a printed board, and it becomes easy to recover a processed material containing a metal included in the printed board and electronic components. The processed material maintaining a state of a plate shape and the electronic components may also be recovered by decomposing the resin in the printed board to some degree. In the above-mentioned processing method for the object 2, all the organic substance is removed without crushing the electronic circuit board, and hence it becomes easy to recover a rare metal contained in the electronic circuit board. Further, when the electronic circuit board is not crushed, the recovery rate of a rare metal can be improved. In addition, the smelting process of a metal at the time of recycling is simplified by removing all the organic substance.

In the above-mentioned embodiment, description has been given of the case in which the surfaces 21 and 22 of the waste substrate 20 are arranged so as to intersect the direction in which the gas flows (X-axis direction), but the present invention is not limited thereto. The surfaces 21 and 22 of the waste substrate 20 may be arranged along the X-axis direction. In the above-mentioned embodiment, the surface 22 of the electronic circuit board on which the electronic components are mounted in a larger number is arranged so as to face the lower wall portion 103. When the surface 22 of the electronic circuit board is arranged so as to intersect (be orthogonal to) the X-axis direction, the gas is brought into direct contact with the surface 22 of the electronic circuit board, and the electronic circuit board can be efficiently processed. In addition, the electronic components in the electronic circuit board easily fall downward by its own weight, and the metal contained in the printed board and the electronic components can be easily separated.

In the above-mentioned embodiment, the object 2 (waste substrate 20) is buried, for example, by 50 mm or more from the surface of the catalysts 30. The depth at which the object 2 (waste substrate 20) is buried from the surface of the catalysts 30 is preferably 100 mm or more, more preferably 150 mm or more, still more preferably 200 mm or more. When the object 2 (waste substrate 20) is buried by 50 mm or more from the surface of the catalysts 30, it is possible to suppress the generation of undecomposed gas of the organic substance when the organic substance in the object 2 (waste substrate 20) is decomposed. The depth at which the object 2 (waste substrate 20) is buried is suitably set in accordance with the size of the reactor 10 and the amount of the catalysts 30 accommodated in the reactor 10.

In the above-mentioned embodiment, description has been given of the case in which the catalysts 30 are formed of granules made of titanium oxide, but the present invention is not limited thereto. The material forming the granules may be a mixture of at least one kind selected from aluminum oxide and silicon oxide and titanium oxide. In addition, the material forming the granules may be at least one kind of inorganic oxide selected from a titanium/niobium composite oxide, a titanium/silicon composite oxide, a composite oxide of at least one kind selected from silicon and tungsten and titanium, a composite oxide of at least one kind selected from silicon and molybdenum and titanium, a titanium/aluminum composite oxide, zirconium oxide, a titanium/zirconium composite oxide, and a titanium-containing perovskite compound. Examples of the titanium-containing perovskite compound may include, but not limited to, strontium titanate, barium titanate zirconate, calcium titanate, and compounds obtained by substituting part of barium, zirconium, strontium, and/or calcium of those compounds with, for example, lanthanum, cerium, or yttrium.

The granules in the above-mentioned embodiment may be produced, for example, by the following method. Titania sol (including at least one kind of sol selected from silica sol, alumina sol, and zirconia sol, as required) is stirred and granulated into spherical granules, and then calcined at a temperature in a range of from 400°C to 850°C. Then, through sieving, granules after the calcination each having a specific particle diameter are obtained.

As the catalysts 30 in the above-mentioned embodiment, granules made of a metal oxide containing titanium on which at least any one of copper or copper oxide is carried may be adopted. Through adoption of such granules, the object 2 can be processed with high efficiency for a long period of time. The above-mentioned granules are produced by carrying at least any one of copper or copper oxide on granules made of a metal oxide containing titanium produced by the above-mentioned method. As a method of allowing at least any one of copper or copper oxide to be carried, various publicly known methods may be used, and among such methods, an impregnation method may be suitably used. For example, the granules obtained in the foregoing are immersed in an aqueous solution of copper nitrate and dried, and then calcined at a temperature of 200°C or more and 500°C or less. Thus, the granules on which at least any one of copper or copper oxide is carried can be obtained. The amount of at least any one of copper or copper oxide to be carried is, for example, 0.1 mass% or more and 10 mass% or less.

The circularity of the granules in the above-mentioned embodiment is 0.5 or more and 5 or less. The circularity of the granules is preferably 1 or more and 2 or less, more preferably 1 or more and 1.5 or less, still more preferably 1 or more and 1.4 or less, particularly preferably 1 or more and 1.3 or less, most preferably 1 or more and 1.2 or less. More specifically, the circularity of 70% or more, preferably 80% or more, more preferably 90% or more of total titanium oxide granules before use is 1 or more and 2 or less, preferably 1 or more and 1.5 or less, more preferably 1 or more and 1.4 or less, still more preferably 1 or more and 1.3 or less, most preferably 1 or more and 1.2 or less. When the circularity of the granules falls within the above-mentioned ranges, the sphericity of the shape of each of the granules can be increased. The measurement of the above-mentioned circularity is performed, for example, by the following devices under the following conditions. A CCD camera is mounted on an inverted microscope, and image processing is performed by Image-Pro Plus. Specifically, the granules are placed on a plastic petri dish so that the granules do not overlap each other. Then, an image is captured by the following inverted microscope at 4x magnification, and the circularity is automatically measured by Image-Pro Plus.

### (Apparatus)

Microscope: product name "TMD-300", Nikon Corporation
CCD camera: product name "Retiga 2000R (1,600×1,200 pixels)", QImaging
Image processing apparatus: product name "Image-Pro Plus", Media Cybernetics, Inc.

The rest angle of the granules in the above-mentioned embodiment is 15 degrees or more and 35 degrees or less, preferably 20 degrees or more and 35 degrees or less. The measurement of the rest angle is performed, for example, by the following method. 20 g of the granules are allowed to fall from a funnel, and the angle formed by a slope and a horizontal plane when a mountain-like layer is formed is measured. The rest angle is smaller in the case of powder particles having satisfactory flowability. Conversely, the rest angle is larger in the case of powder particles having unsatisfactory flowability.

The tap density of the granules in the above-mentioned embodiment is 1 g/ml or more and 1.8 g/ml or less, preferably 1.03 g/ml or more and 1.6 g/ml or less, more preferably 1.05 g/ml or more and 1.55 g/ml or less. The measurement of the above-mentioned tap density is performed, for example, as described below. About 180 g of the granules are loaded into a 200 ml glass graduated cylinder. The graduated cylinder is allowed to naturally fall repeatedly 10 times from a position of a height of 50 mm onto a rubber sheet having a thickness of 10 mm, and then the graduated cylinder is hit against a side surface of a wooden plate 10 times from a distance of 50 mm. The above-mentioned operation is repeated twice. Then, the scale of the graduated cylinder is read to be defined as a volume V (ml) of the granules. Separately, the granules are dried at 110°C for 3 hours, and then a mass N(g) thereof is measured. Based on the foregoing, the tap density is determined by an expression: N/V.

The wear ratio of the granules in the above-mentioned embodiment is 5 mass% or less, preferably 2 mass% or less, more preferably 1.5 mass% or less, still more preferably 1 mass% or less. The measurement of the above-mentioned wear ratio is performed as described below. The measurement is performed through use of a wear ratio measuring device illustrated in FIG. 3. That is, the wear ratio measuring device has a configuration in which a stirrer 202 is mounted on a sample container 201 having an inner diameter of 63 mm and a depth of 86 mm. In the stirrer 202, three elliptical stirring blades 204 each having a length of 20 mm are attached to a lower end portion of a shaft body 203 so as to extend in a diametrical direction from the shaft body 203 at intervals of 60°, and the stirring blades 204 are each inclined so as to have an angle of 45° with respect to a horizontal direction. A lowermost edge of each of the stirring blades 204 is positioned at a distance of 8 mm from the bottom of the sample container 201. When the wear ratio of titanium oxide granules is measured, 150 ml of the granules are measured with a 200 ml graduated cylinder, and the mass thereof is recorded. After that, the whole amount is loaded into the sample container 201 and stirred through use of the above-mentioned stirrer at 300 rpm for 30 minutes. Then, the sample is taken out from the sample container 201, and the whole amount is transferred to a sieve having a mesh size of 0.5 mm. The mass of the sample having passed through the sieve is measured. Here, a wear ratio A of the sample is determined by an expression: A=(W/W₀)×100 (%), where W represents the mass of the sample having passed through the sieve having a mesh size of 0.5 mm and W₀ represents the mass of the sample used for the measurement.

The specific surface area of the granules in the above-mentioned embodiment is 30 m²/g or more and 100 m²/g or less, more preferably 30 m²/g or more and 60 m²/g or less, still more preferably 30 m²/g or more and 50 m²/g or less, particularly preferably 30 m²/g or more and 40 m² or less. When the specific surface area of the granules is less than 30 m²/g, the contact area between the granules and the object 2 becomes small, and, in some cases, the object 2 cannot be sufficiently processed. When the specific surface area of the granules is more than 100 m²/g, the heat resistance of the granules may be lowered, and the granules may be easily collapsed and powdered. Accordingly, it is preferred that the specific surface area of the granules be 30 m²/g or more and 100 m²/g or less. The measurement of the above-mentioned specific surface area is performed by, for example, a BET method. The BET method is a method involving adsorbing molecules each having a known adsorption occupied area to surfaces of powder particles at a temperature of liquid nitrogen and determining, based on the amount thereof, a specific surface area of a sample. As a measuring device, a 2300 type automatic measuring device (manufactured by Shimadzu Corporation) may be used.

The pore volume of the granules in the above-mentioned embodiment is 0.1 ml/g or more and 0.8 ml/g or less, more preferably 0.2 ml/g or more and 0.6 ml/g or less, still more preferably 0.3 ml/g or more and 0.55 ml/g or less, particularly preferably 0.4 ml/g or more and 0.5 ml/g or less. The measurement of the above-mentioned pore volume is performed by, for example, a mercury intrusion method. The mercury intrusion method is a method involving applying pressure in order to cause mercury to intrude into pores of powder through use of the large surface tension of mercury and determining a pore volume based on the pressure and the amount of mercury having intruded under pressure. As a measuring device, a porosimeter (mercury intrusion type, maximum pressure: 200 MPa) manufactured by Thermo Finnigan LLC may be used.

The particle diameter of the granules in the above-mentioned embodiment is preferably 0.2 mm or more and less than 1.2 mm when the waste substrate 20 is processed. In such case, the particle diameter of each of 70 mass% or more, preferably 80 mass% or more, still more preferably 85 mass% or more of all the granules is 0.35 mm or more and less than 0.85 mm, more preferably 0.4 mm or more and less than 0.85 mm, still more preferably 0.5 mm or more and less than 0.85 mm. For other applications, granules each having a larger particle diameter may be used. The particle diameter in this case is, for example, 1 mm or more and less than 2 mm.

Description has been given of the case in which the side wall portion 101 has a hollow cylindrical shape, but the present invention is not limited thereto. The side wall portion 101 may have a prismatic outer shape while having a hollow shape. For example, when the side wall portion 101 has a hollow rectangular parallelepiped shape, it is preferred that a cross-section of the side wall portion 101 perpendicular to the X-axis direction have a rectangular shape. When the side wall portion 101 has such shape, the container 40 can be displaced along a long side. When the length of the long side is set to be longer, the processing time for decomposing the organic substance in the waste substrate 20 can be made longer. In addition, an inner wall of the side wall portion 101 in the above-mentioned embodiment may have a tapered (curved surface) shape in which the inner diameter increases with distance from the lower wall portion 103. Further, the inner wall of the side wall portion 101 in the above-mentioned embodiment may have a tapered (curved surface) shape in which the inner diameter increases with distance from the upper wall portion 102. In the above-mentioned embodiment, description has been given of the case in which the outer shape of the supply port 11 has a circular shape in plan view from the X-axis direction, but the present invention is not limited thereto. The outer shape of the supply port 11 may have a rectangular shape in plan view from the X-axis direction. In the above-mentioned embodiment, description has been given of the case in which one pipe 51 is connected to the supply port 11, but the present invention is not limited thereto. A plurality of nozzles may be installed in the lower wall portion 103, and the plurality of nozzles may be attached to the lower wall portion 103 so as to be exposed to the inside of the space V. When the plurality of nozzles are provided in this manner, it becomes easy to slightly move only the catalysts 30 in a specific region. In addition to the reactor 10, the catalysts 30, and the container 40, the processing apparatus 1 in the above-mentioned embodiment may include any one or more means selected from oxidation catalyst processing means, reduction catalyst processing means, lime neutralization processing means, gas supply means, alumina catalyst processing means, heat exchange means, preheater means, exhaust blower means, cooling means, heat recovery means, hydrogen chloride continuous measuring means, CO continuous measuring means, and alarm means.

In the above-mentioned embodiment, description has been given of the case in which the waste substrate 20 is an electronic circuit board, but the present invention is not limited thereto. The waste substrate 20 may be, for example, a plate-like material, such as a decorative steel plate or a resin laminated plate. In addition to the waste substrate 20, as the object 2, general waste containing an organic substance, such as waste plastic or resin, industrial waste, medical waste and infectious medical waste, and experimental waste (laboratory animal corpse such as a rat) can be processed. In addition, the organic substances that can be decomposed through use of the catalysts 30 are not particularly limited, and may be thermosetting resins as well as general-purpose thermoplastic resins, such as polyethylene and polypropylene, organic substances contained in medical waste, and the like.

### (Second Embodiment)

Next, a second embodiment is described. The processing method in the second embodiment basically includes the same steps as those in the first embodiment and exhibits the same effects as those therein. However, in the second embodiment, the configuration of the processing apparatus 1 is different from that of the first embodiment. The differences from the first embodiment are described below.

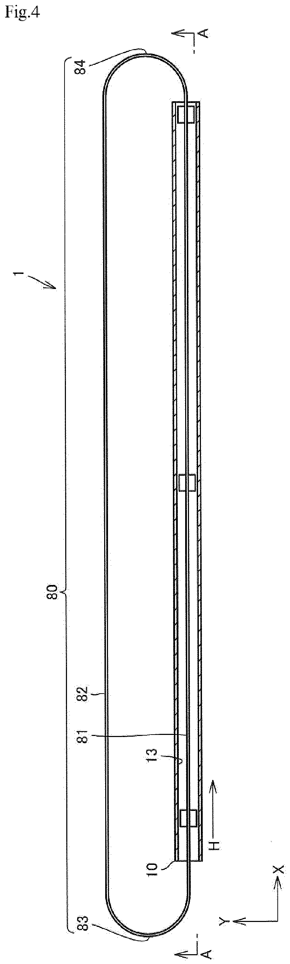

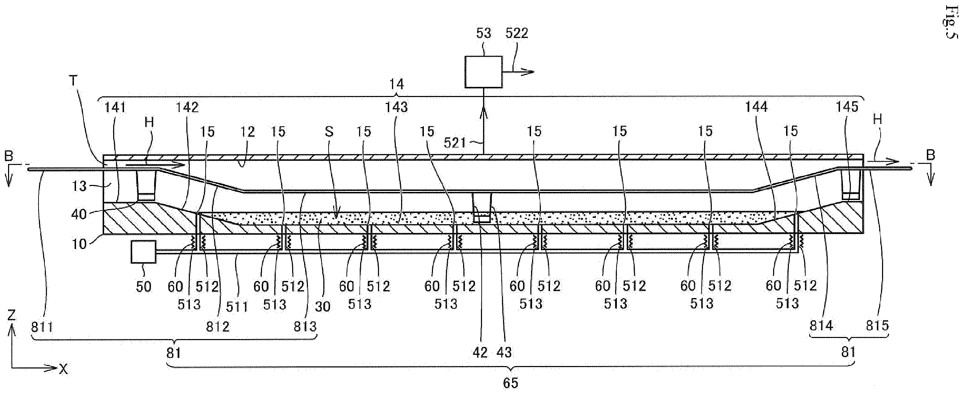

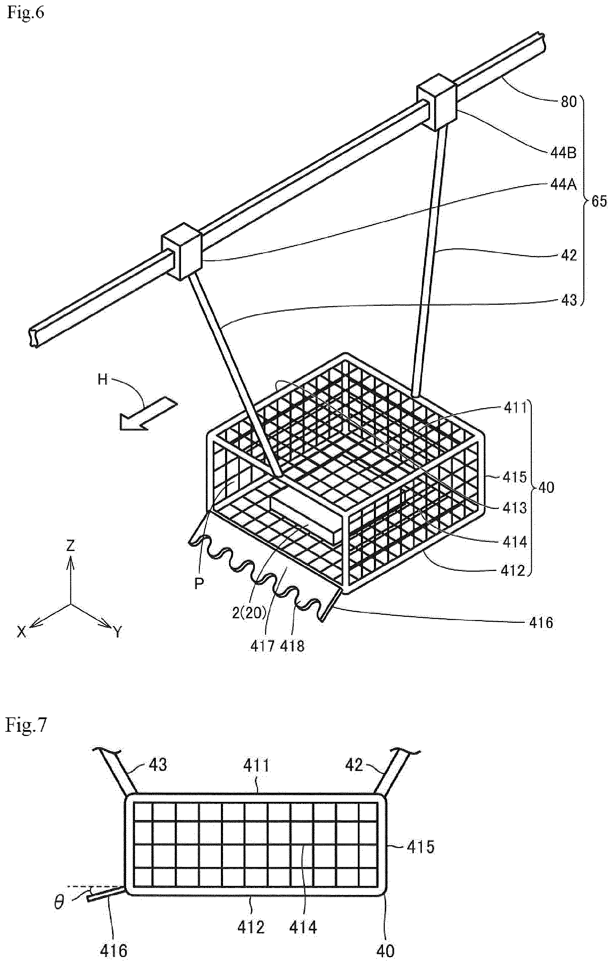

FIG. 4 and FIG. 5 are each a schematic sectional view for illustrating a structure of the processing apparatus 1 in the second embodiment. FIG. 4 is a sectional view taken along the line B-B of FIG. 5. FIG. 5 is a sectional view taken along the line A-A of FIG. 4. FIG. 6 is a schematic perspective view for illustrating the container 40 in a state of traveling on a rail. FIG. 7 is a schematic side view for illustrating the container 40 in the state of traveling on the rail. In FIG. 4 and FIG. 5, the X-axis direction is a direction in which a first rail in the rail extends. The Z-axis direction is a vertical direction. The Y-axis direction is a direction perpendicular to the X-Z plane.

Referring to FIG. 4 and FIG. 5, the processing apparatus 1 in this embodiment includes a reaction tank 10 serving as a first portion that is a portion for processing the object 2, the catalysts 30, a supply unit 50, a gas processing unit 53, heating units 60, the container 40, and a support unit 65 that supports the container 40. The reaction tank 10 has a shape in which a space for processing the object 2 is formed. Referring to FIG. 4 and FIG. 5, the reaction tank 10 has, for example, a rectangular parallelepiped shape. In this embodiment, in the reaction tank 10, a space T that penetrates through from one end portion to another end portion is formed. More specifically, the space T extends along the X-axis direction.

In this embodiment, the reaction tank 10 includes a first inner wall surface 12, a pair of second inner wall surfaces 13, and a third inner wall surface 14 that surround the space T. The first inner wall surface 12 has, for example, a planar shape. More specifically, the third inner wall surface 14 is arranged at a distance from the first inner wall surface 12 in the Z-axis direction. The first inner wall surface 12 and the third inner wall surface 14 are arranged in parallel to each other. The pair of second inner wall surfaces 13 are connected to the first inner wall surface 12 and the third inner wall surface 14, respectively. The pair of second inner wall surfaces 13 are each arranged at an interval in the Y-axis direction. The second inner wall surface 13 has, for example, a planar shape.

In this embodiment, the third inner wall surface 14 includes a first surface 141, a second surface 142, a third surface 143, a fourth surface 144, and a fifth surface 145. The first surface 141, the second surface 142, the third surface 143, the fourth surface 144, and the fifth surface 145 each have, for example, a planar shape. More specifically, the first surface 141, the third surface 143, and the fifth surface 145 are each arranged in parallel to the X-Y plane. The first surface 141 and the fifth surface 145 are positioned at the same height in the Z-axis direction. In the Z-axis direction, the height of the third surface 143 is lower than the height of the first surface 141. The second surface 142 is connected to the first surface 141 and the third surface 143. The fourth surface 144 is connected to the third surface 143 and the fifth surface 145. The second surface 142 and the fourth surface 144 are each inclined with respect to the X-Y plane. In this embodiment, through holes 15 communicating to a first recess S are formed along the Z-axis direction in the reaction tank 10. More specifically, a plurality of through holes 15 (eight in this embodiment) are formed at intervals in the X-axis direction. One opening portions of the through holes 15 are formed on the second surface 142, the third surface 143, and the fourth surface 144. Another opening portions of the through holes 15 are formed on an outer wall of the reaction tank 10. In this embodiment, the first recess S surrounded by the second surface 142, the third surface 143, the fourth surface 144, and the pair of second inner wall surfaces 13 is formed on an inner wall surface of the reaction tank 10.

Referring to FIG. 5, the catalysts 30 are maintained in a state of being accommodated in the first recess S. The catalysts 30 are formed of granules made of a metal oxide containing titanium. In this embodiment, the catalysts 30 are formed of granules made of titanium oxide (titanium dioxide). The granules each have, for example, a substantially spherical shape. The substantially spherical shape means that corners of the surface of the granule are rounded off and sphericity is high. The particle diameter of the granules is the same as that in the first embodiment. In this embodiment, the rolling inclination angle of the granules is the same as that in the first embodiment. The processing apparatus 1 does not include a stirring unit that stirs the catalysts 30 for all the catalysts 30 accommodated in the first recess S.

The supply unit 50 supplies gas containing oxygen. The supply unit 50 is, for example, a blower. The gas containing oxygen is, for example, mixed gas containing oxygen. More specifically, the gas containing oxygen is air. In this embodiment, the supply unit 50 is connected to the reaction tank 10 through intermediation of a first pipe 511 and second pipes 512. More specifically, the first pipe 511 extends along the X-axis direction. The supply unit 50 is arranged in one end portion of the first pipe 511. The second pipes 512 extend along the Z-axis direction from branch points 513 in the first pipe 511. A plurality of second pipes 512 are arranged at intervals in the X-axis direction. The second pipes 512 are each arranged so that the space surrounding the second pipe 512 communicates to the through hole 15. The gas supplied from the supply unit 50 is supplied into the first recess S. In this embodiment, the heating unit 60 is arranged along the outer circumference of each of the second pipes 512. The heating unit 60 heats the gas supplied by the supply unit 50. The heating unit 60 is, for example, a heater. In this manner, the gas containing oxygen is supplied into the first recess S, and the catalysts 30 accommodated in the first recess S are heated.

Referring to FIG. 5 and FIG. 6, in this embodiment, the support unit 65 includes drive units 44A and 44B serving as the first components, connecting portions 42 and 43, and a rail 80. The rail 80 has a shape in which the drive units 44A and 44B can travel. Referring to FIG. 1 and FIG. 2, the rail 80 has, for example, an annular shape. In this embodiment, the rail 80 includes a first rail 81, a second rail 82, a third rail 83, and a fourth rail 84. More specifically, in plan view in the Z-axis direction, the first rail 81 and the second rail 82 extend linearly along the X-axis direction. The first rail 81 and the second rail 82 are arranged in parallel to each other. The third rail 83 is connected to one end portion of each of the first rail 81 and the second rail 82. The fourth rail 84 is connected to another end portion of each of the first rail 81 and the second rail 82. Referring to FIG. 5, the first rail 81 is arranged so as to pass through the space T in the reaction tank 10. The first rail 81 is arranged, for example, so as to be exposed from the catalysts 30. In this embodiment, the first rail 81 includes a first straight portion 811, a second straight portion 813, a third straight portion 815, a first inclined portion 812, and a second inclined portion 814. More specifically, the first straight portion 811, the second straight portion 813, and the third straight portion 815 each extend along the X-axis direction. The first straight portion 811 and the third straight portion 815 have the same height in the Z-axis direction. In the Z-axis direction, the height of the second straight portion 813 is lower than the height of the first straight portion 811. The first inclined portion 812 is connected to the first straight portion 811 and the second straight portion 813. The second inclined portion 814 is connected to the second straight portion 813 and the third straight portion 815. The first inclined portion 812 and the second inclined portion 814 are each inclined with respect to the Z-axis direction.

Referring to FIG. 4, FIG. 5, and FIG. 6, the drive units 44A and 44B are enabled to travel on the rail 80 by, for example, a built-in motor (not shown). The connecting portions 42 and 43 each have a shape suitable for suspending the container 40. The connecting portions 42 and 43 each have, for example, a shape extending linearly. More specifically, the drive unit 44A is connected to one end portion of the connecting portion 42. The drive unit 44B is connected to one end portion of the connecting portion 43. Referring to FIG. 6 and FIG. 7, the container 40 is connected to another end portions of the connecting portions 42 and 43. The connecting portions 42 and 43 are connected to the drive units 44A and 44B and the container 40, and thus the drive units 44A and 44B are mounted on the container 40.

Referring to FIG. 5, FIG. 6, and FIG. 7, the container 40 has a shape suitable for holding the object 2 to be processed in the container 40. The container 40 has, for example, a rectangular parallelepiped shape. More specifically, the container 40 is made of a metal (iron) capable of maintaining the form thereof at a temperature of about 550°C. In this embodiment, the container 40 includes a first outer wall 411, a second outer wall 412, a third outer wall 413, a fourth outer wall 414, and a fifth outer wall 415. The first outer wall 411, the second outer wall 412, the third outer wall 413, the fourth outer wall 414, and the fifth outer wall 415 each have, for example, a mesh-like shape that enables the catalysts 30 to pass therethrough. More specifically, the mesh size of each of the first outer wall 411, the second outer wall 412, the third outer wall 413, the fourth outer wall 414, and the fifth outer wall 415 is, for example, 1 mm or more. The mesh size of each of the first outer wall 411, the second outer wall 412, the third outer wall 413, the fourth outer wall 414, and the fifth outer wall 415 is preferably 2 mm or more and 100 mm or less, more preferably 2 mm or more and 50 mm or less, still more preferably 2 mm or more and 30 mm or less, particularly preferably 2 mm or more and 6 mm or less. The above-mentioned mesh size is suitably determined based on the sizes of the object 2 and the catalysts 30.

Each of the outer walls has a shape suitable for holding the object 2 to be processed. The first outer wall 411, the second outer wall 412, the third outer wall 413, the fourth outer wall 414, and the fifth outer wall 415 each have, for example, a flat plate shape. More specifically, the first outer wall 411 and the second outer wall 412 are arranged in parallel to each other at an interval in the Z-axis direction. The third outer wall 413 and the fourth outer wall 414 are arranged in parallel to each other at an interval in the Y-axis direction. In plan view from the Y-axis direction, the first outer wall 411 is connected to one long side of the third outer wall 413, and the second outer wall 412 is connected to another long side of the third outer wall 413. In plan view from the Y-axis direction, the first outer wall 411 is connected to one long side of the fourth outer wall 414, and the second outer wall 412 is connected to another long side of the fourth outer wall 414. In plan view from the X-axis direction, the first outer wall 411 is connected to one long side of the fifth outer wall 415, and the second outer wall 412 is connected to another long side of the fifth outer wall 415. Further, the third outer wall 413 is connected to one short side of the fifth outer wall 415, and the fourth outer wall 414 is connected to another short side of the fifth outer wall 415.

In this embodiment, an opening portion P surrounded by the first outer wall 411, the second outer wall 412, the third outer wall 413, and the fourth outer wall 414 is formed in the container 40. The object 2 can be arranged inside the container 40 from the opening portion P. The object 2 is held in a space surrounded by the first outer wall 411, the second outer wall 412, the third outer wall 413, the fourth outer wall 414, and the fifth outer wall 415. In this embodiment, the first outer wall 411 is connected to another end portions of the connecting portions 42 and 43. More specifically, in plan view from the Z-axis direction, the connecting portion 42 and the connecting portion 43 are arranged across the center of gravity of the container 40. In this manner, the container 40 can be displaced along a traveling direction H of the rail 80.

The processing apparatus 1 may include means for enabling the container 40 to sink into the catalysts 30. In this embodiment, the processing apparatus 1 further includes a brim portion 416. More specifically, the brim portion 416 is arranged so as to protrude from an outer edge of the second outer wall 412. In plan view from the Z-axis direction, the brim portion 416 is connected to a side of the second outer wall 412 opposite to a side to which the fifth outer wall 415 is connected. The brim portion 416 protrudes in a direction of the arrow in the traveling direction H of the rail 80. The brim portion 416 has, for example, a flat plate shape. The brim portion 416 is inclined with respect to the second outer wall 412. In this embodiment, the angle formed by the brim portion 416 and the second outer wall 412 is, for example, 10 degrees or more and 45 degrees or less. In this embodiment, the brim portion 416 includes a plurality of protrusions 418 which protrude from a main body portion 417 and which are arranged at intervals in the Y-axis direction.

For example, after the gas generated by the decomposition of the organic substance in the object 2 in the reaction tank 10 is processed, the gas may be discharged to the outside. Referring to FIG. 5, in this embodiment, the processing apparatus 1 includes the gas processing unit 53 that is a portion for processing the gas generated by the decomposition of the organic substance in the object 2. More specifically, the reaction tank 10 is connected to one end portion of a pipe 521. The pipe 521 is connected so that a space surrounded by the pipe 521 communicates to the space T. The gas processing unit 53 is connected to another end portion of the pipe 521. The gas processed by the gas processing unit 53 is discharged to the outside through a pipe 522. As the above-mentioned gas processing unit 53, there are given, for example, oxidation catalyst processing means, reduction catalyst processing means, lime neutralization processing means, and the like.

Next, a processing method for the object 2 through use of the processing apparatus 1 in this embodiment is described. Referring to FIG. 2, first, the step of arranging the object 2 inside the container 40 is performed as the step (S10). Referring to FIG. 6, the waste substrate 20 serving as the object 2 is prepared. In this embodiment, the waste substrate 20 is an electronic circuit board including a printed board and electronic components mounted on the printed board. The size (area in plan view) of the waste substrate 20 is the same as that in the first embodiment. The waste substrate 20 is arranged inside the container 40 from the opening portion P of the container 40. The waste substrate 20 is arranged so as to intersect (be orthogonal to) the Z-axis direction. In this embodiment, the surface of the electronic circuit board on which the electronic components are mounted in a larger number is arranged so as to face the third inner wall surface 14.

Then, referring to FIG. 4 and FIG. 5, when the drive units 44A and 44B travel on the rail 80, the container 40 is displaced along the rail 80 under a state in which the waste substrate 20 is accommodated in the container 40. When the drive units 44A and 44B travel on the first rail 81, the container 40 is displaced in the reaction tank 10. For example, description is given of a case in which the drive units 44A and 44B travel in the direction of the arrow in the traveling direction H. When the drive units 44A and 44B travel on the first straight portion 811 of the first rail 81, the container 40 is displaced along the horizontal direction (X-axis direction), and the container 40 enters the reaction tank 10. The waste substrate 20 accommodated in the container 40 is arranged in the reaction tank 10. In this state, the container 40 is not in contact with the catalysts 30. When the drive units 44A and 44B travel on the first inclined portion 812 of the first rail 81, the container 40 is displaced along the vertical direction (Z-axis direction) and the horizontal direction (X-axis direction). The container 40 is displaced so that the height of the container 40 is lower than the height of the container 40 in the Z-axis direction when the drive units 44A and 44B travel on the first straight portion 811. As a result, the container 40 is buried in the catalysts 30 accommodated in the first recess S, and the waste substrate 20 is covered with the catalysts 30. The depth at which the waste substrate 20 is buried in the catalysts 30 is the same as that in the first embodiment. In this case, the container 40 is brought into a state of being in contact with the catalysts 30.

Next, as the step (S20), the step of decomposing the organic substance is performed. More specifically, the container 40 is displaced along the X-axis direction by causing the drive units 44A and 44B to travel on the second straight portion 813 of the first rail 81. At this time, the displacement speed is suitably set so that the catalysts 30 are not stirred by the container 40. In this case, the waste substrate 20 is covered with the catalysts 30, and the organic substance in the waste substrate 20 is maintained in a state of being in contact with the catalysts 30. Then, gas containing oxygen is caused to flow into the first recess S, and the catalysts 30 are maintained at a temperature of 480°C or more and 550°C or less. In this embodiment, the temperature of the gas supplied into the first recess S is appropriately set so that the catalysts 30 fall within the above-mentioned temperature range. Before the waste substrate 20 is arranged in the reaction tank 10, the catalysts 30 are heated to a predetermined temperature (for example, 480°C or more and 550°C or less). The flow velocity (m/min) of the gas flowing into the first recess S and the flow rate (l/min) of the gas per unit mass (g) of the catalysts 30 are the same as those in the first embodiment. The temperature of the catalysts 30 is the same as that in the first embodiment.

In the step (S20), the gas is caused to flow into the first recess S so that the decomposition reaction of the organic substance in the waste substrate 20 occurs. In this case, the gas is caused to flow so as to spread throughout the inside of the first recess S. Further, the gas is caused to flow into the first recess S so that the decomposition reaction of the organic substance in the waste substrate 20 occurs, and the catalysts 30 are slightly moved in at least a part of the surface of the waste substrate 20. When the organic substance in the waste substrate 20 is decomposed, the volume of the waste substrate 20 is reduced. Owing to the gas flowing into the first recess S, the catalysts 30 are slightly displaced on the surface of the waste substrate 20 to come into contact with different regions of the waste substrate 20. Such movement of the catalysts 30 continuously occurs, and the catalysts 30 are slightly moved in at least a part of the surface of the waste substrate 20. In this manner, the catalysts 30 are caused to slightly flow on the surface of the waste substrate 20. The gas is caused to flow into the first recess S to such a degree that the catalysts 30 do not form a fluidized bed.

In this embodiment, in the step (S20), the step of stirring the catalysts 30 for all the catalysts 30 accommodated in the first recess S is not performed. Then, when the drive units 44A and 44B travel on the second inclined portion 814 of the first rail 81, the container 40 is displaced along the horizontal direction (X-axis direction) and the vertical direction (Z-axis direction). The container 40 is displaced so that the height of the container 40 is higher than the height of the container 40 in the Z-axis direction when the drive units 44A and 44B travel on the second straight portion 813. In this manner, the container 40 is taken out from the catalysts 30. Then, the drive units 44A and 44B travel on the third straight portion 815 of the first rail 81, and the container 40 is displaced to the outside of the reaction tank 10. After the step (S20), the step of recovering a decomposed product may be performed. For example, when the drive units 44A and 44B travel on the second rail 82, the decomposed product may be taken out from the container 40. In addition, after the step (S20), the step (S10) and the step (S20) may be repeatedly performed again. For example, when the drive units 44A and 44B travel on the second rail 82, the waste substrate 20 may be arranged again in the container 40, and the processing of the waste substrate 20 may be repeatedly performed. In this case, the catalysts 30 accommodated in the first recess S are maintained at a temperature of 480°C or more and 550°C or less, and the waste substrate 20 is covered with the catalysts 30. As a result, the organic substance in the waste substrate 20 can be decomposed.

In this embodiment, the container 40 is displaced so that the waste substrate 20 held in the container 40 is covered with the catalysts 30. Then, the gas containing oxygen is supplied into the first recess S, and the catalysts 30 are heated. As a result, the organic substance in the waste substrate 20 can be decomposed. After the waste substrate 20 is processed, the container 40 is displaced along the vertical direction (Z-axis direction), and the container 40 is taken out from the catalysts 30. In this case, the container 40 is brought into a state of not being in contact with the catalysts 30. When the container 40 is displaced in the vertical direction (Z-axis direction), the catalysts 30 fall into the first recess S, and hence it is possible to reduce the leakage of the catalysts 30 from the first recess. The catalysts 30 are maintained in a state of being accommodated in the first recess S, and hence it is easy to repeatedly process the waste substrate 20 in the reaction tank 10. The processing apparatus 1 in this embodiment does not include a stirring unit that stirs the catalysts 30 for all the catalysts 30 accommodated in the first recess S. When the processing apparatus 1 does not include the above-mentioned stirring unit, it is possible to reduce the rubbing between the catalysts 30 and between the waste substrate 20 and the catalysts 30. As a result, the wear of the catalysts 30 is reduced. In this manner, according to the processing apparatus 1 in this embodiment, it becomes easy to repeatedly process the object 2 (waste substrate 20), and the object 2 (waste substrate 20) can be processed for a long period of time.

In the processing apparatus 1 in this embodiment, the container 40 is movable when at least a part of the container 40 is in contact with the catalysts 30. More specifically, the container 40 can be displaced along the horizontal direction (X-axis direction). Through adoption of such configuration, the catalysts 30 are easily brought into contact with the surface of the waste substrate 20, and the organic substance in the waste substrate 20 can be more efficiently decomposed. In the above-mentioned embodiment, description has been given of the case in which the container 40 is displaced along the X-axis direction, but the present invention is not limited thereto. The container 40 may be rotated about an axis while being displaced along the X-axis direction. In addition, the container 40 may be vibrated with respect to the catalysts 30. The container 40 is moved so that the catalysts 30 are not stirred. For example, the displacement speed, the rotation speed, and the magnitude of vibration of the container 40 are suitably set so that the catalysts 30 are not stirred.

In the processing apparatus 1 in this embodiment, the support unit 65 includes the rail 80 including the first inclined portion 812 and the second inclined portion 814, and the drive units 44A and 44B capable of traveling on the rail 80. Through adoption of such configuration, the container 40 can be displaced along the rail 80. As a result, it becomes easy to continuously process the waste substrate 20. In addition, owing to the first inclined portion 812 and the second inclined portion 814, it becomes easy to displace the container 40 along the vertical direction (Z-axis direction).

The processing apparatus 1 in this embodiment includes the brim portion 416 mounted on the container 40 so as to protrude to any one of sides in the traveling direction H of the rail 80. Through adoption of such configuration, it becomes easy to cause the brim portion 416 to sink into the catalysts 30 while displacing the container 40 along the rail 80. Accordingly, it becomes easy to cause at least a partial region of the container 40 to sink so as to be covered with the catalysts 30.

The processing apparatus 1 in this embodiment does not include a stirring unit that stirs the catalysts 30 for all the catalysts 30 accommodated in the first recess S. When the object 2 and the catalysts 30 are stirred through use of such stirring unit, the object 2 and the catalysts 30 are agitated, and the organic substance in the object 2 may be exposed to the surface. In such case, undecomposed gas (for example, methane gas, carbon monoxide gas, and the like) formed without the organic substance being completely decomposed may be generated. When the object 2 and the catalysts 30 are not stirred through use of such stirring unit, the exposure of the organic substance in the object 2 to the surface is suppressed, and hence the generation of the above-mentioned undecomposed gas of the organic substance can be reduced. In addition, in the waste substrate 20 having such size and shape that make it difficult to stir, the waste substrate 20 can be processed as it is without being finely crushed. The waste substrate 20 can be processed as it is without being finely crushed, and hence the waste substrate 20 can be easily processed.

In the above-mentioned embodiment, the surface of the electronic circuit board on which the electronic components are mounted in a larger number is arranged so as to face the third inner wall surface 14. With this configuration, the gas is brought into direct contact with the surface of the electronic circuit board, and the electronic circuit board can be efficiently processed. In addition, the electronic components in the electronic circuit board easily fall downward by its own weight, and the metal contained in the printed board and the electronic components can be easily separated.

The material forming the granules of the catalysts 30 is the same as that in the first embodiment. In the same manner as in the first embodiment, as the catalysts 30, granules made of a metal oxide containing titanium on which at least any one of copper or copper oxide is carried may be adopted. The circularity, rest angle, tap density, wear ratio, specific surface area, and pore volume of the granules are the same as those in the first embodiment. In the same manner as in the first embodiment, in addition to the electronic circuit board, the waste substrate 20 may be, for example, a plate-like material such as a decorative steel plate or a resin laminated plate. Further, in the same manner as in the first embodiment, in addition to the waste substrate 20, as the object 2, general waste containing an organic substance, such as waste plastic or resin, industrial waste, medical waste and infectious medical waste, and experimental waste (laboratory animal corpse such as a rat) can be processed.

### (Modification Example)

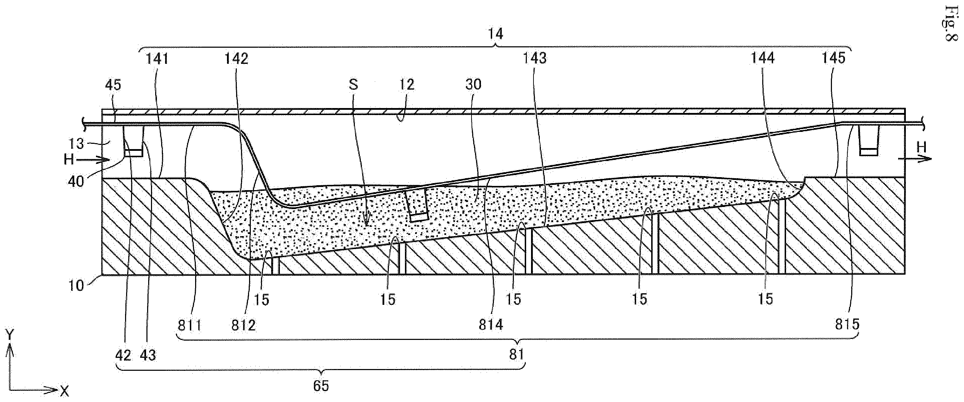

The third surface 143 of the third inner wall surface 14 of the reaction tank 10 may be inclined with respect to the X-Y plane. FIG. 8 is a schematic sectional view for illustrating a modification example of the processing apparatus 1 of the first embodiment. Referring to FIG. 8, the height in the Z-axis direction of a region in which the second surface 142 and the third surface 143 are connected becomes the lowest, and the height in the Z-axis direction of the third surface 143 increases with distance from the second surface 142. The first rail 81 of the rail 80 is formed of the first straight portion 811, the third straight portion 815, the first inclined portion 812, and the second inclined portion 814. Partial regions of the first inclined portion 812 and the second inclined portion 814 are covered with the catalysts 30. When the drive units 44A and 44B travel on the region in which the first inclined portion 812 and the second inclined portion 814 are connected, the container 40 is most deeply buried from the surface of the catalysts 30. Initially, in the processing of the waste substrate 20, undecomposed gas (for example, methane gas, carbon monoxide gas, and the like) formed without the organic substance being completely decomposed may be generated. Through adoption of the configuration in the above-mentioned modification example, the above-mentioned undecomposed gas is decomposed by the catalysts 30, and the generation of the undecomposed gas can be reduced.

### (Third Embodiment)

Next, a third embodiment, which is another embodiment of the processing apparatus 1 of the present invention, is described. The processing apparatus 1 in the third embodiment basically has the same configurations as those of the first embodiment and exhibits the same effects as those therein. However, in the third embodiment, the configurations of the reaction tank 10 and the rail 80 are different from those in the case of the second embodiment. Now, the differences from the second embodiment are described.

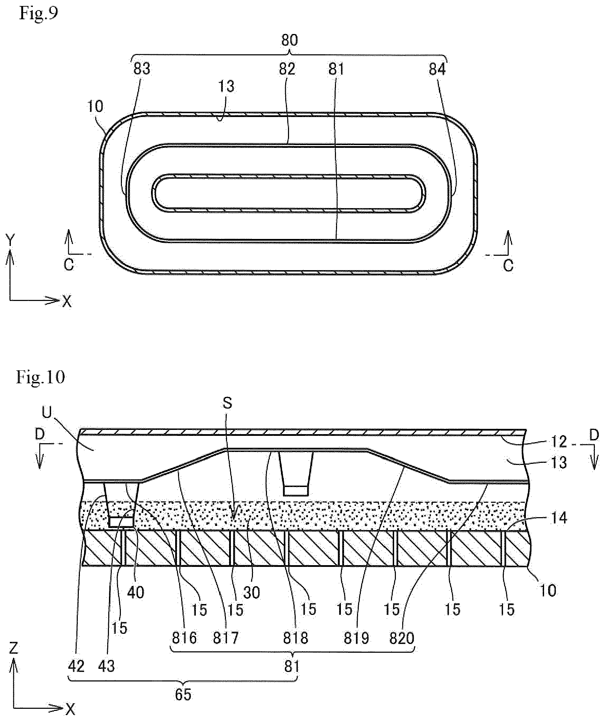

FIG. 9 and FIG. 10 are each a schematic sectional view for illustrating a structure of the processing apparatus 1 in the second embodiment. FIG. 9 is a sectional view taken along the line D-D of FIG. 10. FIG. 10 is a sectional view taken along the line C-C of FIG. 9. Referring to FIG. 9 and FIG. 10, the reaction tank 10 has, for example, an annular shape. More specifically, an annular space U is formed in the reaction tank 10. In this embodiment, the reaction tank 10 includes the first inner wall surface 12, the pair of second inner wall surfaces 13, and the third inner wall surface 14 that surround the space U. The first inner wall surface 12 and the third inner wall surface 14 each have, for example, an annular shape in plan view. The pair of second inner wall surfaces 13 each have, for example, an annular shape. In this embodiment, the annular first recess S surrounded by the pair of second inner wall surfaces 13 and the third inner wall surface 14 is formed in the reaction tank 10. The catalysts 30 are accommodated in the first recess S.

In this embodiment, the first rail 81 of the rail 80 includes a fourth straight portion 816, a fifth straight portion 818, a sixth straight portion 820, a third inclined portion 817, and a fourth inclined portion 819. More specifically, the fourth straight portion 816, the fifth straight portion 818, and the sixth straight portion 820 each extend along the X-axis direction. The fourth straight portion 816 and the sixth straight portion 820 have the same height in the Z-axis direction. In the Z-axis direction, the height of the fifth straight portion 818 is higher than the height of the fourth straight portion 816. The third inclined portion 817 is connected to the fourth straight portion 816 and the fifth straight portion 818. The fourth inclined portion 819 is connected to the fifth straight portion 818 and the sixth straight portion 820. The third inclined portion 817 and the fourth inclined portion 819 are each inclined with respect to the Z-axis direction.

In this embodiment, when the drive units 44A and 44B travel on the fourth straight portion 816, the sixth straight portion 820, the second rail 82, the third rail 83, and the fourth rail 84, the container 40 is displaced along the horizontal direction (X-axis direction). In this case, the container 40 is buried in the catalysts 30, and the object 2 is covered with the catalysts 30. In this embodiment, when the drive units 44A and 44B travel on the third inclined portion 817 and the fourth inclined portion 819, the container 40 is displaced along the horizontal direction (X-axis direction) and the vertical direction (Z-axis direction). In this embodiment, when the drive units 44A and 44B travel on the fifth straight portion 818, the container 40 is displaced along the horizontal direction (X-axis direction). More specifically, the height of the container 40 in the Z-axis direction becomes higher than the height of the container 40 when the drive units 44A and 44B travel on the fourth straight portion 816, the sixth straight portion 820, the second rail 82, the third rail 83, and the fourth rail 84. In this case, the container 40 is exposed from the catalysts 30. When the drive units 44A and 44B travel on the fifth straight portion 818, the object 2 (see FIG. 3) is arranged in the container 40, and a decomposed product is taken out. In this case, in a region of the first inner wall surface 12 of the reaction tank 10, which corresponds to the fifth straight portion 818, for example, an opening portion (not shown) may be formed so that the object 2 can be arranged in the container 40, and the decomposed product can be taken out. Further, an openable cover (not shown) may be attached so as to close the opening portion. In addition, in a region of the second inner wall surface 13 of the reaction tank 10, which corresponds to the fifth straight portion 818, a heat insulating plate (not shown) may be attached in order to insulate heat from the catalysts 30. In this manner, the processing of the object 2 is repeatedly performed.

Even with the processing apparatus 1 in the above-mentioned third embodiment, it becomes easy to repeatedly process the object 2 in the same manner as in the second embodiment, and the object 2 can be processed for a long period of time. According to the processing apparatus 1 in this embodiment, the processing apparatus 1 can be made more compact as compared to the processing apparatus 1 in the second embodiment.

### (Fourth Embodiment)

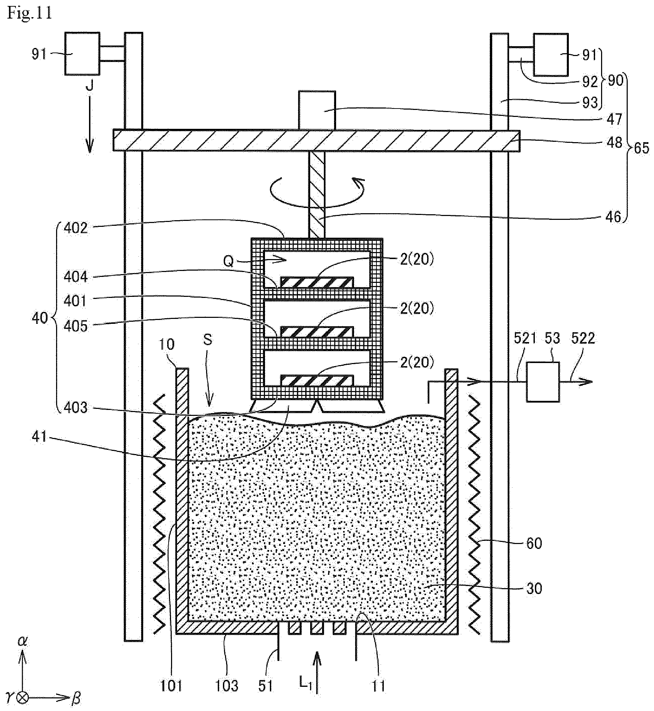

Next, a fourth embodiment, which is another embodiment of the processing apparatus 1 of the present invention, is described. FIG. 11 is a schematic sectional view for illustrating a structure of the processing apparatus 1 in the fourth embodiment. In FIG. 11, an α-axis direction is a vertical direction, and a β-γ plane is a plane perpendicular to the α-axis direction. Referring to FIG. 11, in this embodiment, the processing apparatus 1 includes the reactor 10 serving as a first component, the catalysts 30, the container 40, a blade portion 41, the gas processing unit 53, the heating unit 60, and the support unit 65.

In this embodiment, the reactor 10 includes the side wall portion 101 and the lower wall portion 103. The side wall portion 101 has, for example, a hollow cylindrical shape. More specifically, the lower wall portion 103 having a flat plate shape is arranged so as to close one opening of the side wall portion 101. The first recess S surrounded by the side wall portion 101 and the lower wall portion 103 is formed in the reactor 10. The state in which the catalysts 30 are accommodated in the first recess S is maintained. The supply port 11 is formed at the center of the lower wall portion 103. In this embodiment, the supply port 11 is formed of a plurality of through holes. In plan view from the X-axis direction, the outer shape of the supply port 11 has a circular shape. The pipe 51 is installed on the lower wall portion 103. The pipe 51 is arranged so that the space surrounded by the pipe 51 and the supply port 11 communicate to each other. The pipe 51 is a gas inflow path. Accordingly, gas flows into the first recess S of the reactor 10 from the pipe 51 in a direction of an arrow L₁. The pipe 521 is installed at another opening of the side wall portion 101. The gas processing unit 53 is connected to an end portion of the pipe 521 opposite to the reactor 10. The heating unit 60 is arranged along the outer circumference of the side wall portion 101. In this embodiment, the catalysts 30 accommodated in the first recess S are heated by the heating unit 60. The processing apparatus 1 does not include a stirring unit that stirs the catalysts 30 for all the catalysts 30 accommodated in the first recess S.

The container 40 has a shape capable of accommodating the catalysts 30 therein. The container 40 has, for example, a rectangular parallelepiped shape having an internal space Q. In this embodiment, the container 40 has a mesh-like shape that enables the catalysts 30 to pass therethrough. More specifically, the container 40 is made of a metal (iron) capable of maintaining the form thereof at a temperature of about 550°C. In this embodiment, the container 40 includes a first wall portion 401 serving as a peripheral wall portion, a second wall portion 402, a third wall portion 403 serving as a bottom wall portion, and stages 404 and 405. The second wall portion 402 and the stages 404 and 405 are mounted so as to be removable from the first wall portion 401. The first wall portion 401, the second wall portion 402, the third wall portion 403, and the stages 404 and 405 each have, for example, a mesh-like shape. More specifically, the mesh size of each of the first wall portion 401, the second wall portion 402, the third wall portion 403, and the stages 404 and 405 is the same as that of the container 40 in the first embodiment. The first wall portion 401 has, for example, a hollow rectangular parallelepiped shape. The second wall portion 402 and the third wall portion 403 each have, for example, a flat plate shape. More specifically, the second wall portion 402 is arranged so as to close one opening of the first wall portion 401. The third wall portion 403 is arranged so as to close another opening of the first wall portion 401. The first wall portion 401 is arranged so as to extend along the Z-axis direction from an outer edge of the third wall portion 403. The blade portion 41 is arranged on a side of the third wall portion 403 opposite to the first wall portion 401. The blade portion 41 is arranged so as to protrude from the third wall portion 403. The blade portion 41 has, for example, a flat plate shape. The size of the blade portion 41 is suitably set in accordance with the volume, diameter, and the like of the reactor 10. In this embodiment, a plurality of (two in this embodiment) mesh-like stages 404 and 405 for separating the internal space Q in the container 40 are arranged in the container 40 at intervals in the X-axis direction. Three waste substrates 20 can be arranged in the container 40 in this embodiment.

In this embodiment, the support unit 65 includes a first motor 47, a plate 48, and conveyors 90. More specifically, each of the conveyors 90 includes a second motor 91 and a belt 93 serving as a second component. The belt 93 is installed in an end portion of a shaft portion 92 of the second motor 91. The belt 93 has a band-like shape in which both ends in a longitudinal direction are connected to each other. The belt 93 is arranged so as to extend along the α-axis direction. The plate 48 having a flat plate shape is fixed to the belts 93 so as to intersect (be orthogonal to) the α-axis direction. When the second motors 91 are driven, the belts 93 are displaced along the α-axis direction, and the plate 48 is also displaced along the α-axis direction. The first motor 47 is installed on the plate 48. In this embodiment, the second wall portion 402 of the container 40 is connected to a tip end of a shaft portion 46 of the first motor 47. More specifically, the shaft portion 46 is connected to a region substantially at the center of the second wall portion 402. The first motor 47 is arranged so that, when the first motor 47 is driven, the container 40 is turned along the β-γ plane perpendicular to the α-axis direction. When the first motor 47 is driven, the container 40 is turned, and the blade portion 41 is also turned along the β-γ plane. Accordingly, the blade portion 41 attached to the container 40 is turnable.

Next, a processing method for the object 2 through use of the processing apparatus 1 in this embodiment is described. Referring to FIG. 2, first, the step of arranging the object 2 is performed as the step (S10). Referring to FIG. 11, the waste substrate 20 serving as the object 2 is prepared. The waste substrate 20 is an electronic circuit board having the same area as that of the first embodiment. The waste substrate 20 is arranged in the container 40 in the same manner as in the first embodiment. More specifically, the waste substrate 20 is arranged under a state in which the second wall portion 402 and the stages 404 and 405 are removed from the first wall portion 401. Then, after the stage 404 is mounted on the first wall portion 401, the waste substrate 20 is arranged. Further, after the stage 405 is mounted on the first wall portion 104, the waste substrate 20 is arranged. In this manner, the three waste substrates 20 are arranged in the container 40.

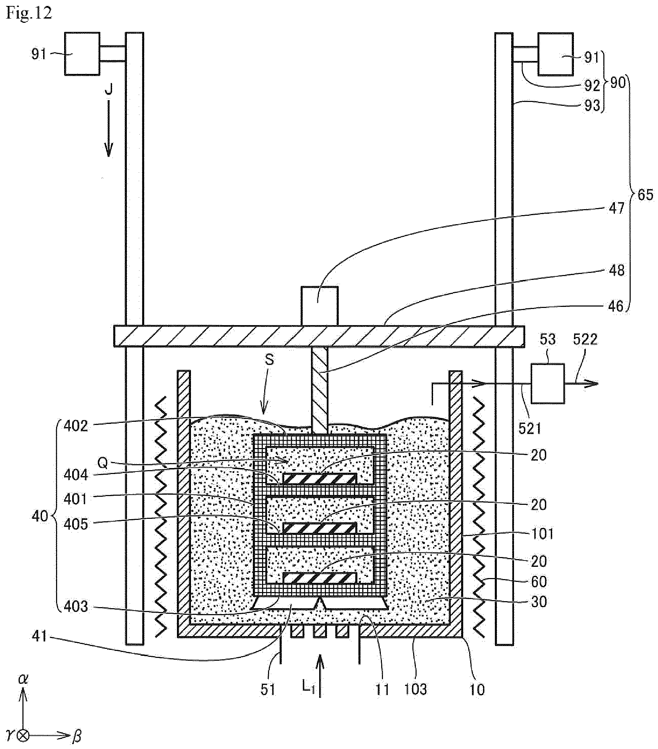

Under a state in which the waste substrates 20 are accommodated in the container 40, the second motors 91 are driven to displace the belts 93 along the α-axis direction. When the belts 93 are displaced along the α-axis direction, the container 40 is displaced along the α-axis direction. For example, description is given of a case in which the container 40 is displaced in a direction of an arrow in a traveling direction J of the belts 93. The first motor 47 is driven to turn the container 40, to thereby turn the blade portion 41 along the β-γ plane. With this configuration, it becomes easy to bury the container 40 in the catalysts 30. In this state, the container 40 is not in contact with the catalysts 30. Then, the container 40 is displaced in the direction of the arrow in the traveling direction J so that the container 40 is covered with the catalysts 30. FIG. 12 is a schematic view for illustrating a state in which the container 40 and the waste substrates 20 are covered with the catalysts 30. Referring to FIG. 12, the container 40 is buried in the catalysts 30 accommodated in the first recess S, and the waste substrates 20 are covered with the catalysts 30. Each of the waste substrates 20 is buried, for example, by 50 mm or more from the surface of the catalysts 30. In this case, the container 40 is brought into a state of being in contact with the catalysts 30, and the waste substrates 20 are arranged in the reaction tank 10.

Next, the step of decomposing the organic substance is performed as the step (S20). More specifically, each of the waste substrates 20 is covered with the catalysts 30, and the organic substance in the waste substrate 20 is maintained in a state of being in contact with the catalysts 30. Then, gas containing oxygen is caused to flow into the first recess S, and the catalysts 30 are maintained at a temperature of 480°C or more and 550°C or less. The gas flowing into the first recess S is caused to flow into the first recess in the same manner as in the first embodiment. The flow velocity (m/min) of the gas flowing into the first recess S and the flow rate (l/min) of the gas per unit mass (g) of the catalysts 30 are the same as those in the first embodiment. The temperature of the catalysts 30 is the same as that in the first embodiment. The catalysts 30 in the reactor 10 are maintained at a predetermined temperature by being heated by the heating unit 60 from an outer wall side of the reactor 10. In this embodiment, in the step (S20), the step of stirring the catalysts 30 for all the catalysts 30 accommodated in the first recess S is not performed.

The container 40 is displaced in a direction opposite to the direction of the arrow in the traveling direction J of the belts 93, and the container 40 is taken out from the catalysts 30. Then, decomposed products are taken out from the container 40, and the waste substrates 20 are arranged again in the container 40. As described above, the processing of the waste substrates 20 is repeatedly performed.

In the above-mentioned embodiment, description has been given of the case in which the blade portion 41 is turned by turning the container 40, but the present invention is not limited thereto. The blade portion 41 itself may be turned without turning the container 40. In the step (S20) in the above-mentioned embodiment, the container 40 may be turnable. More specifically, the container 40 may be turned along the β-γ plane. In this case, the container 40 is turned so that the catalysts 30 are not stirred by the blade portion 41 attached to the container 40 or the container 40 itself. For example, the blade portion 41 having appropriate size and protrusion length is used and the rotation speed is suitably set so that the catalysts 30 are not stirred. In addition, the container 40 may be displaced so as to reciprocate along the β-axis direction, or may be displaced only in the direction of the arrow β or the opposite direction thereto. Further, the container 40 may be vibrated with respect to the catalysts 30. In such case, the container 40 is displaced or vibrated so that the catalysts 30 are not stirred. For example, the displacement speed and the magnitude of vibration of the container 40 are suitably set so that the catalysts 30 are not stirred. The step of moving the container 40 under a state in which the container 40 is covered with the catalysts 30 may be simultaneously performed throughout the entirety of the step of decomposing the organic substance in the waste substrate 20, or in a part of the step of decomposing the organic substance in the waste substrate 20. The waste substrate 20 is not required be moved with respect to the catalysts 30 throughout the entirety of the step of decomposing the organic substance in the waste substrate 20.

In the above-mentioned embodiment, description has been given of the case in which the side wall portion 101 has a hollow cylindrical shape, but the present invention is not limited thereto. The side wall portion 101 may have a prismatic outer shape while having a hollow shape. For example, when the side wall portion 101 has a hollow rectangular parallelepiped shape, it is preferred that a cross-section of the side wall portion 101 perpendicular to the α-axis direction have a rectangular shape. When the side wall portion 101 has such shape, the container 40 can be displaced along a long side. When the length of the long side is set to be longer, the processing time for decomposing the organic substance in the waste substrate 20 can be made longer. In addition, an inner wall of the side wall portion 101 in the above-mentioned embodiment may have a tapered (curved surface) shape in which the inner diameter increases with distance from the lower wall portion 103. Further, the inner wall of the side wall portion 101 in the above-mentioned embodiment may have a tapered (curved surface) shape in which the inner diameter increases with distance from the upper wall portion 102. In the above-mentioned embodiment, description has been given of the case in which the outer shape of the supply port 11 has a circular shape in plan view from the X-axis direction, but the present invention is not limited thereto. The outer shape of the supply port 11 may have a rectangular shape in plan view from the X-axis direction. In the above-mentioned embodiment, description has been given of the case in which one pipe 51 is connected to the supply port 11, but the present invention is not limited thereto. A plurality of nozzles may be installed in the lower wall portion 103, and the plurality of nozzles may be attached to the lower wall portion 103 so as to be exposed to the inside of the first recess S. When the plurality of nozzles are provided in this manner, it becomes easy to slightly move only the catalysts 30 in a specific region. In the above-mentioned embodiment, description has been given of the case in which the shaft portion 46 of the first motor 47 is attached substantially to the center of the second wall portion 402 of the container 40, but the present invention is not limited thereto. The tip end of the shaft portion 46 may be attached to a part of the outer edge of the second wall portion 402. Further, an outer peripheral surface of the shaft portion 46 may be attached to the first wall portion 401 of the container 40 so that the container 40 is turned about a center axis of the shaft portion 46.

Even with the processing apparatus 1 in the above-mentioned fourth embodiment, it becomes easy to repeatedly process the object 2 in the same manner as in the second embodiment, and the object 2 can be processed for a long period of time.

### Examples

### [Experiment 1]

An experiment of decomposing the organic substance in the object 2 by the processing method according to the embodiment of the present invention was conducted. The process for the experiment is as described below. First, granules serving as the catalysts 30 used in this experiment were produced by the following method. A slurry of titanium hydroxide obtained from a hydrolysis step in a production process of titanium oxide by a sulfuric acid method was filtered, washed with water, and repulped to obtain a slurry A. Nitric acid was added as a solating agent to the slurry A to obtain a sol B of titanium oxide. Further, a part of the sol B was heated to 100°C and dried to obtain a dry gel. The dry gel was calcined at 500°C for 3 hours in an electric furnace to obtain a titanium oxide calcined product C. The titanium oxide calcined product C was ground, and the obtained ground product was granulated while the sol B diluted by 5-fold with water was sprayed under conditions of a stirring blade of 250 rpm and a high-speed chopper of 3,000 rpm through use of high-speed stirring granulator SPG-25 manufactured by Dalton Corporation, to thereby obtain titanium oxide particles. The titanium oxide particles were dried at 100°C for 3 hours, then calcined at 600°C, and after that, sieved through use of a 15-mesh standard sieve (wire diameter: 0.5 mm, mesh size: 1.19 mm) and a 150-mesh standard sieve (wire diameter: 0.065 mm, mesh size: 0.104 mm) made of a stainless steel wire mesh. Particles below the 15-mesh (passing portion) and particles above the 150-mesh (residual portion) were defined as granules to be used in this experiment. In this manner, granules (first granules) made of titanium oxide were obtained.

The particle size distribution of the obtained first granules was as described below. The amount of the first granules having a particle diameter of 0.2 mm or more and less than 0.35 mm was 0 mass%. The amount of the first granules having a particle diameter of 0.35 mm or more and less than 0.5 mm was 1 mass%. The amount of the first granules having a particle diameter of 0.5 mm or more and less than 0.85 mm was 97 mass%. The amount of the first granules having a particle diameter of 0.85 mm or more and less than 1.2 mm was 2 mass%. The specific surface area of the first granules by a BET method was 35 m²/g. The angle at which the first granules started sliding was 0.5 degree or more and 15 degrees or less, and the angle at which all the first granules finished sliding was 2 degrees or more and 30 degrees or less. The pore volume of the first granules by the mercury intrusion method was 0.1 ml/g or more and 0.8 ml/g or less. The tap density of the first granules was 1 g/ml or more and 1.8 g/ml or less. The wear ratio of the first granules was 2 mass% or less.

Next, 2,100 g of the obtained first granules were arranged in the reactor 10 illustrated in FIG. 1. The catalysts 30 were arranged in the reactor 10 so that the height thereof in the X-axis direction became about 100 mm. An electronic circuit board including a printed board having a thickness of 1.4 mm and an area of about 3 cm in length and about 3 cm in width was prepared as the waste substrate 20. The electronic circuit board was accommodated in the container 40. The container 40 was buried by about 30 mm from the surface of the catalysts 30 (electronic circuit board was about 5 cm), and the electronic circuit board was arranged so that the surface of the electronic circuit board was covered with the catalysts 30. The container 40 was repeatedly displaced for about 15 minutes so as to reciprocate along the Y-axis direction. The electronic circuit board was processed under the conditions that the flow velocity of air was 3.4 m/min and the set temperature of a heating device was 500°C (temperature of the catalysts 30 in the reactor 10 fell within a range of from 480°C to 540°C) without performing the step of stirring the first granules for all the first granules in the reactor 10, to thereby obtain a decomposed product. The mass reduction ratio (mass%) of the electronic circuit board before the processing and the decomposed product was measured. Here, the reduction ratio (mass%) refers to a ratio (mass%) of a value obtained by subtracting the mass of the decomposed product from the mass of the electronic circuit board before the processing with respect to the mass of the electronic circuit board before the processing. Further, the state of the decomposed product was visually observed. For comparison, the electronic circuit board was processed in the same manner as above except that the set temperature was set to 400°C (temperature of the catalysts 30 in the reactor 10 fell within a range of from 400°C to 440°C). The mass reduction ratio (mass%) of the electronic circuit board before the processing and the decomposed product was measured in the same manner. The measurement results of the above-mentioned reduction ratio are shown in Table 1.

**[Table 1]**

| Set temperature of heating device (°C) | Temperature range of catalysts (°C) | Reduction ratio (%) |
|---|---|---|
| 400°C | 400°C to 440°C | 10.3% |
| 500°C | 480°C to 540°C | 36.3% |

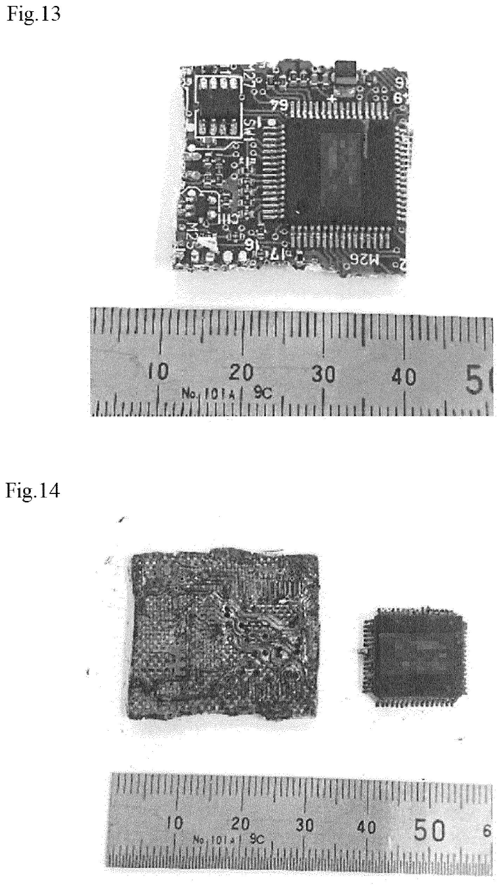

Referring to Table 1, as compared to the case in which the set temperature was set to 400°C (temperature range of the catalysts 30 was from 400°C to 440°C), when the set temperature was set to 500°C (temperature range of the catalysts 30 was from 480°C to 540°C), the reduction ratio increased by about 3 times. Accordingly, when the temperature of the catalysts 30 in the reactor 10 is set to 480°C or more and 550°C or less, the decomposition of the organic substance in the electronic circuit board can be improved. FIG. 13 is a photograph for showing the state of the electronic circuit board before the processing. FIG. 14 is a photograph for showing the state of the decomposed product when the set temperature of the heating device is set to 500°C. Referring to FIG. 13 and FIG. 14, the resin of the printed board in the electronic circuit board was decomposed. Further, a processed material containing a metal (for example, a copper foil) included in the printed board and the electronic components were able to be separately recovered.

### [Experiment 2]

Next, an experiment was conducted in the same manner as in Experiment 1 except that a glass epoxy substrate having no components mounted thereon was used as the waste substrate 20, and the flow velocity of air was changed to 0.5 m/min, 3.4 m/min, 5 m/min, and 10 m/min. A glass epoxy substrate having a thickness of 1.5 mm and an area of about 6 cm in length and about 4 cm in width was used. The measurement results of a reduction ratio for each flow velocity are shown in Table 2.

**[Table 2]**

| Flow velocity of air (m/min) | Reduction ratio (%) |
|---|---|
| 0.5 m/min | 23.9% |
| 3.4 m/min | 36.3% |
| 5 m/min | 38.1% |
| 10 m/min | 37.7% |

Referring to Table 2, when the flow velocity of air was in a range of 0.5 m/min or more and 200 m/min or less, the reduction ratio was 20% or more. When the flow velocity of air was 3 m/min or more, the reduction ratio was 35% or more. Accordingly, it is preferred that the lower limit of the flow velocity of air be 3 m/min. When the flow velocity of air was 10 m/min, the reduction ratio was about the same as that in the case in which the flow velocity of air was 5 m/min. Accordingly, it is preferred that the upper limit of the flow velocity of air be 10 m/min.

### [Experiment 3]

Next, 1,600 g of the obtained first granules were arranged in the reactor 10 illustrated in FIG. 1. A resin decorative steel plate (length: about 5 cm, width: about 5 cm) in which a steel plate, a polyethylene terephthalate film, and an aluminum foil were laminated was prepared as the waste substrate 20. The resin decorative steel plate was buried by about 50 mm from the surface of the catalysts 30, and the resin decorative steel plate was arranged so that the surface of the resin decorative steel plate was covered with the catalysts 30. The resin decorative steel plate was displaced for about 60 seconds so as to reciprocate along the Y-axis direction. The resin decorative steel plate was processed under the conditions that the flow velocity of air was 2.3 m/min and the set temperature was 500°C without performing the step of stirring the first granules for all the first granules in the reactor 10. The state of the resin decorative steel plate after the processing was visually observed. As a result, the polyethylene terephthalate film in the resin decorative steel plate was decomposed, and the steel plate and the aluminum foil remained.

### [Experiment 4]

Next, under the same processing conditions as those of the resin decorative steel plate, processing was performed by using, as the object 2, a molding machine extrusion screw component made of a metal (length: about 4 cm, width: about 4 cm, height: about 5 cm) having a resin adhering thereto. As a result, the resin adhering to the molding machine extrusion screw component was decomposed, and only the molding machine extrusion screw component remained.

### [Experiment 5]

Next, an experiment for checking the degree of wear of the catalysts 30 caused by stirring the catalysts 30 for all the catalysts 30 in the reactor 10 was conducted. The process for the experiment is as described below.

First, 800 g of the first granules were arranged in the reactor 10 illustrated in FIG. 1. Air was caused to flow into the reactor 10 for 10 hours under the condition of a flow velocity of 3.4 m/min without performing the step of stirring the first granules for all the first granules in the reactor 10 and without performing heating by the heating device. The degree of wear of the first granules caused by performance of the processing was measured. The process for measuring the degree of wear of the first granules is as described below. First, the first granules after the processing were sieved with a sieve having a mesh size of 250 um. Then, a mass (V) of the first granules remaining on the sieve was measured. A ratio (mass%) of a value (V₀-V) obtained by subtracting the mass (V) of the first granules remaining on the sieve from the mass (V₀) of the first granules before the processing with respect to the mass (V₀) of the first granules before the processing was calculated. For comparison, processing was performed in the same manner as above except that the first granules were stirred for all the first granules in the reactor 10 through use of the stirring blades, and the flow velocity of air flowing into the reactor 10 was set to 2 m/min. The rotation speed of the stirring blades was set to 60 rpm. Similarly, the degree of wear of the first granules was measured. The measurement results are shown in Table 3.

**[Table 3]**

| Processing | Degree of wear of catalysts (%) |
|---|---|
| No stirring performed | 0.05% |
| Stirring performed | 1.29% |

Referring to Table 3, as compared to the case in which the first granules were stirred, when the first granules were not stirred, the degree of wear of the first granules was significantly reduced. Accordingly, when the catalysts 30 are not stirred, the wear of the catalysts 30 can be reduced.

### [Experiment 6]

Next, an experiment of comparing the degree of generation of undecomposed gas between the case in which the catalysts 30 were stirred for all the catalysts 30 in the reactor 10 and the case in which the above-mentioned stirring was not performed was conducted. The process for the experiment is as described below.

First, 2,500 g of the first granules were arranged in the reactor 10 illustrated in FIG. 1. A polypropylene cap attached to a PET bottle was prepared and buried by about 80 mm from the surface of the catalysts 30. The cap was processed under the conditions that the above-mentioned state was maintained, the flow velocity of air was 1.7 m/min, the set temperature was 500°C, and the processing time was 5 minutes. The processing of the cap was performed without performing the step of stirring the first granules for all the first granules in the reactor 10. The generation ratio of undecomposed gas was measured in gas (5 liters) discharged when the processing of the cap was performed. A detector tube type gas measuring instrument was used for the measurement. As the measuring instrument, "GV-100S" (product name) manufactured by Gastec Corporation was used. As the detector tube, "1L", "103", "105", and "2HH" (product names) manufactured by Gastec Corporation were used. For comparison, the cap was arranged in the reactor 10, and the first granules were stirred for all the first granules in the reactor 10 through use of the stirring blades, to thereby perform stirring of the cap and the first granules. The cap was processed under the conditions that the flow velocity of air was 3.4 m/min, the set temperature was 500°C, and the processing time was 2 minutes. The generation ratio of undecomposed gas was measured in gas (2 liters) discharged when the processing of the cap was performed. The measurement results are shown in Table 4. In Table 4, the volumes of the undecomposed gases converted from the volumes of the discharged gases are shown together with the ratios of the undecomposed gases. In Table 4, examples of the lower hydrocarbon include acetylene, isobutane, isopentane, ethylene, butane, n-hexane, heptane, pentane, and propane. Examples of the higher hydrocarbon include octane, decane, nonane, hexane, and heptane.

**[Table 4]**

| Processing | Carbon monoxide | Lower hydrocarbon | Higher hydrocarbon |
|---|---|---|---|
| No stirring performed | 600 ppm (3 ml) | 150 ppm (0.3 ml) | 400 ppm (2 ml) |
| Stirring performed | 2,000 ppm or more (4 ml or more) | 250 ppm (0.5 ml) | 2,500 ppm (5 ml) |

Referring to Table 4, as compared to the case in which the step of stirring the catalysts 30 for all the catalysts 30 in the reactor 10 was performed, when the above-mentioned stirring was not performed, the ratios and volumes of the undecomposed gases (carbon monoxide, lower hydrocarbon, and higher hydrocarbon) formed without the cap being completely decomposed were reduced.

From the above-mentioned results, according to the processing method for the object 2 of the present invention, the organic substance in the object 2 can be decomposed even without performing the step of stirring the catalysts 30 for all the catalysts 30 in the reactor 10. Thus, the organic substance in the object 2 can be easily decomposed while the wear of the catalysts 30 is reduced. Accordingly, the object 2 can be processed for a long period of time, and the object 2 can be easily processed.

It is to be understood that Embodiments and Examples disclosed above are merely examples in all aspects and in no way intended to limit the present invention. The scope of the present invention is defined by the claims and not by the above-mentioned description, and modifications made within the scope equivalent to those of the claims are duly included in the present invention.

### Industrial Applicability

The processing method for an object of the present invention is advantageously applied, in particular, to the case in which it is required to process an object for a long period of time or it is required to easily process the object.

### Reference Signs List

1 processing apparatus, 2 object, 10 reactor, reaction tank, 11 supply port, 12 first inner wall surface, 13 second inner wall surface, 14 third inner wall surface, 15 through hole, 20 waste substrate, 21 surface, 22 surface, 30 catalyst, 31 connecting portion, 40 container, 41 blade portion, 42 connecting portion, 43 connecting portion, 44A drive unit, 44B drive unit, 46 shaft portion, 47 first motor, 48 plate, 50 supply unit, 51 pipe, 52 pipe, 53 gas processing unit, 60 heating unit, 65 support unit, 80 rail, 81 first rail, 82 second rail, 83 third rail, 84 fourth rail, 90 conveyor, 91 second motor, 92 shaft portion, 93 belt, 101 side wall portion, 102 upper wall portion, 103 lower wall portion, 141 first surface, 142 second surface, 143 third surface, 144 fourth surface, 145 fifth surface, 201 sample container, 202 stirrer, 203 shaft body, 204 stirring blade, 401 first wall portion, 402 second wall portion, 403 third wall portion, 404 stage, 405 stage, 411 first outer wall, 412 second outer wall, 413 third outer wall, 414 fourth outer wall, 415 fifth outer wall, 416 brim portion, 417 main body portion, 418 protrusion, 511 first pipe, 512 second pipe, 513 branch point, 521 pipe, 522 pipe, 811 first straight portion, 812 first inclined portion, 813 second straight portion, 814 second inclined portion, 815 third straight portion, 816 fourth straight portion, 817 third inclined portion, 818 fifth straight portion, 819 fourth inclined portion, 820 sixth straight portion

## Claims

1. A processing method for an object containing an organic substance, comprising the steps of:
arranging the object in a first portion that is a portion having a space and configured to process the object; and
decomposing an organic substance in the object by covering the object with catalysts formed of granules made of a metal oxide containing titanium and bringing the catalysts into contact with the organic substance, and simultaneously maintaining the catalysts in the first portion at a temperature of 480°C or more and 550°C or less,
wherein the step of decomposing the organic substance in the object includes causing gas containing oxygen to flow into the first portion so that a decomposition reaction of the organic substance occurs, and the catalysts are slightly moved in at least a part of a surface of the object.

2. The processing method for an object according to claim 1, wherein the step of decomposing the organic substance in the object is prevented from including the step of stirring the catalysts for all the catalysts in the first portion.

3. The processing method for an object according to claim 1 or 2, wherein the step of decomposing the organic substance in the object further includes the step of moving the object while maintaining a state in which the object is covered with the catalysts.

4. The processing method for an object according to claim 3,
wherein the step of arranging an object includes arranging the object accommodated in a container having a mesh-like shape that enables the catalysts to pass therethrough in the first portion, and
wherein the step of moving the object in the first portion includes moving the container under a state in which the object is accommodated in the container.

5. The processing method for an object according to any one of claims 1 to 4, wherein a flow velocity of the gas containing oxygen when the gas containing oxygen is caused to flow into the first portion is 0.5 m/min or more and 200 m/min or less.

6. The processing method for an object according to any one of claims 1 to 5, wherein the step of decomposing the organic substance in the object includes burying the object by 5 cm or more from a surface of a plurality of catalysts accommodated in the space of the first portion.

7. The processing method for an object according to any one of claims 1 to 6, wherein the gas containing oxygen is air.

8. The processing method for an object according to any one of claims 1 to 7,
wherein the granules each have a particle diameter of 0.2 mm or more and less than 2 mm, and
wherein an angle at which the granules start sliding is 0.5 degree or more and 15 degrees or less, and an angle at which all the granules finish sliding is 2 degrees or more and 30 degrees or less.

9. The processing method for an object according to any one of claims 1 to 8, wherein the object is a waste substrate.

10. The processing method for an object according to claim 9, wherein the waste substrate has an area of 4 cm² or more in plan view from a thickness direction.

11. A processing apparatus for decomposing an organic substance in an object, comprising:
a first portion that is a portion having a first recess and configured to process the object;
catalysts formed of granules made of a metal oxide containing titanium, which are maintained in a state of being accommodated in the first recess;
a supply unit connected to the first portion and configured to supply gas containing oxygen into the first recess;
a heating unit configured to heat at least any one of the catalysts or the gas;
a container configured to accommodate the object and having a shape that enables the catalysts to pass therethrough; and
a support unit configured to support the container,
wherein the container is enabled to be displaced along a vertical direction so as to selectively take a state in which at least a part of the container is in contact with the catalysts in the first recess and a state in which the container is prevented from being in contact with the catalysts, and
wherein the processing apparatus is prevented from comprising a stirring unit configured to stir the catalysts for all the catalysts accommodated in the first recess.

12. The processing apparatus according to claim 11, wherein, when at least a part of the container is in contact with the catalysts, the container is movable.

13. The processing apparatus according to claim 11 or 12, wherein the support unit includes:
a rail including an inclined portion inclined with respect to a vertical direction; and
a first component which is mounted on the container and which is travelable on the rail.

14. The processing apparatus according to claim 13, further comprising a brim portion which is mounted on the container and which protrudes to any one of sides in a traveling direction of the rail.

15. The processing apparatus according to claim 11 or 12, wherein the support unit includes a second component which is mounted on the container and which is enabled to be displaced along the vertical direction.

16. The processing apparatus according to claim 15,
wherein the container includes a bottom wall portion and a peripheral wall portion extending along the vertical direction from an outer edge of the bottom wall portion, and
wherein the container further includes a blade portion which protrudes to a side of the bottom wall portion opposite to the peripheral wall portion and which is turnable along an imaginary plane perpendicular to the vertical direction.

17. The processing apparatus according to any one of claims 11 to 16, wherein the gas containing oxygen is air.
